# NEUE EUROPÄISCHE PATENTSCHRIFT

(11) **EP 4 229 317 B2**
(45) Veröffentlichungstag und Bekanntmachung des Hinweises auf die Entscheidung über den Einspruch: **11.11.2026**
(45) Hinweis auf die Patenterteilung: 07.08.2024
(21) Anmeldenummer: 21783470.4
(22) Anmeldetag: 24.09.2021
(51) Int. Cl.: F16H 49/00, H02K 7/116, B62M 6/55, B62M 21/00, B62M 23/00

(54) **GLEICHZEITIG AUS MENSCHLICHER MUSKELKRAFT UND ELEKTROMOTORISCH ANTREIBBARES FORTBEWEGUNGSMITTEL**
MEANS OF TRANSPORT THAT CAN BE SIMULTANEOUSLY DRIVEN ELECTROMOTIVELY AND BY HUMAN MUSCULAR POWER
MOYEN DE TRANSPORT POUVANT ÊTRE ENTRAÎNÉ SIMULTANÉMENT DE MANIÈRE ÉLECTROMOTRICE ET PAR LA PUISSANCE MUSCULAIRE HUMAINE

(30) Priorität: 13.10.2020 DE 102020212908
(43) Veröffentlichungstag der Anmeldung: 23.08.2023
(73) Patentinhaber: Killwatt GmbH, 95643 Tirschenreuth (DE)
(72) Erfinder: ACKERMANN, Hans Peter, 95643 Tirschenreuth (DE); ACKERMANN, Volker, 95643 Tirschenreuth (DE)
(74) Vertreter: Zimmermann & Partner Patentanwälte mbB
(86) Internationale Anmeldenummer: PCT/EP2021/076355
(87) Internationale Veröffentlichungsnummer: WO 2022/078731

(56) Entgegenhaltungen:
- EP-A1- 0 093 888
- EP-A1- 3 247 619
- EP-A1- 3 822 154
- EP-B1- 3 247 026
- WO-A1-2016/116226
- WO-A1-2020/079498
- WO-A1-2021/190843
- WO-A2-2019/069084
- CN-A- 102 069 888
- CN-A- 103 129 691
- CN-U- 203 332 337
- CN-U- 204 688 340
- DE-A1- 102013 211 431
- DE-A1- 102013 211 437
- DE-A1- 102015 203 534
- DE-A1- 102016 226 251
- DE-A1- 102017 122 949
- DE-B- 1 135 259
- DE-B4- 102014 106 212
- FR-A1- 2 816 386
- US-A1- 2017 259 883
- ANONYMOUS: "File:Harmonic drive cross Legend.svg", WIKIMEDIA COMMONS, 5 December 2016 (2016-12-05), XP093276714, Retrieved from the Internet <URL:https://commons.wikimedia.org/wiki/File:Harmonic_drive_cross_Legend.svg>

## Beschreibung

Die Erfindung betrifft ein gleichzeitig durch aus menschlicher Muskelkraft und elektromotorisch bereitgestellte Antriebsenergie antreibbares Fortbewegungsmittel, insbesondere Pedelec.

Gattungsgemäße Fortbewegungsmittel sind beispielsweise ein- oder mehrspurige Fahrzeuge wie Fahrräder, insbesondere Elektrofahrräder, E-Bikes oder Pedelecs, aber auch Wasserfahrräder, Tretboote oder Rollstühle. Insbesondere sind gattungsgemäße Fortbewegungsmittel Fahrzeuge der Fahrzeugklassen L1e, L2e, L3e, L4e, L5e, L6e und L7e gemäß Artikel 4 der EU-Verordnung 2013/168/EU vom 15. Januar 2013. Ferner zählen hierzu insbesondere Fahrzeuge mit einer bauartbedingten Höchstgeschwindigkeit von bis zu 6 km/h, Fahrzeuge, die ausschließlich zur Benutzung durch körperbehinderte Personen bestimmt sind, wie beispielsweise Rollstühle, Fahrzeuge, die ausschließlich für die Benutzung im sportlichen Wettbewerb bestimmt sind, Fahrräder mit Pedalantrieb mit Trethilfe, die mit einem elektromotorischen Hilfsantrieb mit einer maximalen Nenndauerleistung von bis zu 250 W ausgestattet sind, dessen Unterstützung unterbrochen wird, wenn der Fahrer im Treten einhält, und dessen Unterstützung sich mit zunehmender Fahrzeuggeschwindigkeit progressiv verringert und unterbrochen wird, bevor die Geschwindigkeit des Fahrzeugs 25 km/h erreicht, selbstbalancierende Fahrzeuge mit elektromotorischem Fahrantrieb, Sportfahrzeuge mit Pedalantrieb, Fahrzeuge mit Pedalantrieb, die nicht mindestens einen Sitzplatz haben, und Fahrzeuge mit Pedalantrieb mit einem R-Punkt (gemäß ECE-R 17) ≤400 mm. Sie weisen häufig ein Vorderrad und wenigstens ein Hinterrad auf, die über einen Rahmen miteinander verbunden sind. Es können allerdings auch mehrere Hinterräder, beispielsweise zwei Hinterräder, und/oder mehrere Vorderräder, beispielsweise zwei Vorderräder, insbesondere in beliebiger Kombination, vorhanden sein. Diese können beispielsweise quer zu einer Vorwärtsfahrrichtung nebeneinander, wie beispielsweise in einem Rollstuhl, einem Dreirad oder einem Fahrzeug mit einem Beiwagen, oder auch in Vorwärtsfahrrichtung hintereinander angeordnet sein, wie beispielsweise in einem Tandem. Derartige Fortbewegungsmittel werden immer häufiger mit einer Antriebseinheit mit wenigstens einem Elektromotor ausgestattet, der den Nutzer beim Antrieb des Fortbewegungsmittels unterstützen soll. Typischerweise werden sie nicht von diesem Elektromotor alleine angetrieben, sondern der Elektromotor unterstützt den Nutzer beim Antrieb des Fortbewegungsmittels aus eigener, menschlicher Muskelkraft. Der Elektromotor wird beispielsweise von einer Steuereinheit gesteuert, so dass der Grad der Unterstützung dabei meistens wählbar ist. Auf diese Weise kann ein Nutzer während einer Fahrt mit einem derartigen Fortbewegungsmittel genau so viel eigene Leistung aufbringen, wie er kann oder möchte, während er sich dennoch mit komfortabler und auch im Alltag nutzbarer Geschwindigkeit fortbewegt. Dokument EP3247619A1 (korrespondiert zu WO2016/116226A1zeigt die Präambel des Anspruchs 1. Dokumente WO2019/069084A2, DE102013211437A1, DE102013211431A1, EP3822154A1, CN203332337U, CN204688340U, WO2021/190843A1, CN102069888A und CN103129691A befassen sich ebenfalls mit elektromotorisch angetriebenen ein- oder mehrspurigen Fahrzeugen.

Problematisch an den bisherigen Antriebseinheiten ist deren Baugröße, insbesondere quer zur Längsachse des Fortbewegungsmittels. Die Antriebseinheit wird typischerweise an oder in der Nähe einer Radnabe beziehungsweise an oder in der Nähe eines Antriebslagers, beispielsweise Tretlagers, angeordnet. Zum einen soll die Antriebseinheit nicht zu weit beidseits über das Rad hinausragen. Zum anderen ist bei der Anordnung am Tretlager zu beachten, dass beispielsweise die Kurbelarme der Pedale eines Fahrrades aufgrund der menschlichen Anatomie typischerweise einen maximalen axialen Abstand zueinander von 140-180 mm einhalten sollten. Da sich zwischen den Kurbelarmen ebenfalls noch die Antriebseinheit befindet, wird klar, dass diese möglichst schmal bauend ausgeführt sein sollte, um dem Fahrer ein auch über lange Strecken komfortables Fahrerlebnis zu ermöglichen. Dies bringt allerdings eine Reihe konstruktiver Probleme mit sich, da in den Antriebseinheiten notwendige Drehlager und Freiläufe für sich jeweils einen gewissen Platzbedarf mit sich bringen. Auch die Getriebe und die Elektromotoren nehmen typischerweise einen nicht vernachlässigbaren Bauraum in den Antriebseinheiten, insbesondere in Richtung der Rotationsachse beispielsweise des Tretlagers oder des Hinterrades ein, der die Gesamtbreite der Antriebseinheiten über das gewünschte Ausmaß hinaus vergrößert.

Es ist daher die Aufgabe der vorliegenden Erfindung, ein gattungsgemäßes Fortbewegungsmittel mit einer Antriebseinheit anzugeben, die, insbesondere quer zur Fahrtrichtung des Fortbewegungsmittels, möglichst schmal ausgebildet ist. Gleichzeitig soll die Antriebseinheit flexibel steuerbar sein und den gesamten Funktionsumfang moderner Antriebseinheiten abdecken können.

Die Lösung gelingt mit einem Fortbewegungsmittel gemäß dem unabhängigen Anspruch. Bevorzugte Weiterbildungen sind in den abhängigen Ansprüchen angegeben.

Die erfindungsgemäße Antriebseinheit umfasst eine Eingangsantriebswelle zur Weiterleitung aus menschlicher Muskelkraft erzeugter beziehungsweise bereitgestellter Antriebsenergie. Die Eingangsantriebswelle kann also beispielsweise die Kurbelwelle eines Fahrrades sein oder drehfest mit dieser verbunden sein. Alternativ kann die Eingangsantriebswelle ebenfalls drehfest mit einem Zugmittelzahnrad, beispielsweise dem Kettenblatt, verbunden sein. Die Eingangsantriebswelle ist somit derart angeordnet, dass sie von einem Bediener beziehungsweise Fahrer des Fortbewegungsmittels mit menschlicher Muskelkraft, beispielsweise durch Pedalieren am Fahrrad, in Rotation versetzbar ist. Dies kann direkt oder indirekt erfolgen. Es ist insbesondere vorgesehen, dass dies in Kraftflussrichtung von der Einleitungsstelle menschlicher Muskelkraft in den gesamten Antriebsstrang kommend parallel zu einem Elektromotor erfolgt.

Die erfindungsgemäße Antriebseinheit umfasst weiter eine Ausgangsabtriebswelle zur Abgabe von Antriebsenergie an eine Fahreinrichtung. Die Fahreinrichtung ist beispielsweise wenigstens ein Rad (oder ein Propeller bei Fortbewegungsmitteln im Wasser), welches durch die von der Ausgangsabtriebswelle übertragene Antriebsenergie in Rotation versetzt wird, wodurch das Fortbewegungsmittel fährt. Beispielsweise kann die Ausgangsabtriebswelle drehfest mit einem Zugmittelzahnrad, beispielsweise dem Kettenblatt, verbunden sein. Alternativ kann die Ausgangsabtriebswelle auch beispielsweise drehfest mit einem Nabengehäuse ausgebildet sein, welches die Rotationsbewegung, beispielsweise über Speichen, auf eine Fahreinrichtung überträgt. Die Ausgangsabtriebswelle überträgt ihre Rotation auf die Fahreinrichtung des Fortbewegungsmittels, weshalb die Antriebseinheit dazu ausgebildet ist, die Ausgangsabtriebswelle mit einer Rotation zu beaufschlagen, die einer gewünschten Fahrgeschwindigkeit des Fortbewegungsmittels entspricht. In Kraftflussrichtung von der Einleitungsstelle menschlicher Muskelkraft ist die Ausgangsabtriebswelle somit funktional zwischen der Eingangsantriebswelle und der von Antriebseinheit angetriebenen Fahreinrichtung angeordnet.

Entsprechend ist die Antriebseinheit derart ausgebildet, die Antriebsenergie von der Eingangsantriebswelle auf die Ausgangsabtriebswelle zu übertragen. Gleichzeitig ist es jedoch auch vorgesehen, dass die Antriebseinheit in einer Weise ausgebildet ist, dass sie die auf die Ausgangsabtriebswelle übertragene Drehzahl und das übertragene Drehmoment an aktuelle Anforderungen der Betriebssituation anpassen kann. Dazu umfasst die Antriebseinheit ein um eine Rotationsachse angeordnetes Antriebswellgetriebe mit einem Wellgenerator, einem Flexspline und einem Hohlrad. Bei der Rotationsachse kann es sich beispielsweise insbesondere um die Tretachse eines Tretlagers oder die Radachse einer Fahreinrichtung, insbesondere einer von der Antriebseinheit angetriebenen Fahreinrichtung, handeln. Ein Wellgetriebe ist ein Typ von Getriebe, das aufgrund der einfachen und schmalen Bauweise sowie der Robustheit und hohen Untersetzung für den vorliegenden Anwendungszweck besonders geeignet ist. Wellgetriebe an sich sind im Stand der Technik beschrieben und dem Fachmann bekannt, beispielsweise aus der DE 1 135 259 B. Sie können beispielsweise hohe Drehzahlen mit niedrigen Drehmomenten des Wellgenerators in niedrige Drehzahlen mit hohen Drehmomenten des Flexsplines und/oder des Hohlrades und umgekehrt übersetzen. Darüber hinaus umfasst die Antriebseinheit einen um die Rotationsachse angeordneten Antriebselektromotor mit einem Stator und einem Rotor, wobei Antriebsenergie des Antriebselektromotors über das Antriebswellgetriebe auf die Ausgangsabtriebswelle übertragbar ist. Der Antriebselektromotor kann daher zur Unterstützung des Fahrers beziehungsweise dessen menschlicher Muskelkraft eingesetzt werden, um elektromotorisch bereitgestellte Antriebsenergie auf die Ausgangsabtriebswelle zu übertragen und damit zur Fortbewegung des Fortbewegungsmittels beizutragen. Durch die vergleichsweise hohe Untersetzung des Wellgetriebes können die hohen Drehzahlen und niedrigen Drehmomente des Elektromotors in niedrige Drehzahlen mit hohen Drehmomenten umgewandelt werden, die zum Antrieb des Fortbewegungsmittels nutzbar sind. Hierfür ist der Antriebselektromotor bevorzugt antriebsmäßig mit dem Wellgenerator des Antriebswellgetriebes wirkverbunden. Mit anderen Worten ist der Rotor des Antriebselektromotors bevorzugt drehfest mit dem Wellgenerator verbunden oder gar einstückig mit diesem ausgebildet. Der Abtrieb des Antriebswellgetriebes wird vorliegend bevorzugt vom Hohlrad gebildet. Insbesondere ist das Hohlrad drehfest mit der Ausgangsabtriebswelle der Antriebseinheit verbunden. Die Antriebseinheit der vorliegenden Erfindung zeichnet sich bevorzugt auch dadurch aus, dass sie ausschließlich einen Elektromotor, konkret den Antriebselektromotor, aufweist. Es sind in dieser Ausführungsform also keine weiteren Elektromotoren in der Antriebseinheit und insbesondere nicht am gesamten Fortbewegungsmittel, vorhanden. Darüber hinaus weist die Antriebseinheit bevorzugt ausschließlich ein Wellgetriebe, konkret das Antriebswellgetriebe, auf. Hier sind dann also ebenfalls keine weiteren Wellgetriebe in der Antriebseinheit oder bevorzugt am gesamten Fortbewegungsmittel vorhanden.

Erfindungsgemäß ist es nun vorgesehen, dass der Flexspline als eine sich in Richtung der Rotationsachse erstreckende Hülse ausgebildet ist. Die Hülse ist auf einer axialen Seite mit einem Drehlager verbunden, welche die Hülse beispielsweise gegenüber einem ortsfesten beziehungsweise statischen Gehäuse rotierbar lagert. Zur anderen axialen Seite weist die Hülse einen Eingriffsbereich für den Wellgenerator und insbesondere auch die Außenverzahnung für das Hohlrad auf. Zwischen dem Drehlager und dem Wellgenerator in Richtung der Rotationsachse gesehen ist ein Hülseninnenraum vorhanden. Der Hülseninnenraum beschreibt also ein vom Flexspline und insbesondere der Hülse, insbesondere von der Rotationsachse aus gesehen in Radialrichtung, umschlossenes Volumen. Die Konstruktion des Flexsplines mit Hülse als Flexsplinetopf ist für dessen Biegungs- und Verwindungseigenschaften und damit der fehlerfreien Funktion des Wellgetriebes hilfreich. Der Hülseninnenraum wird bei der Erfindung allerdings genutzt, um auf sehr effektive Weise Bauraum einzusparen. Es ist daher vorgesehen, dass der Antriebselektromotor in Axialrichtung der Rotationsachse zumindest teilweise, bevorzugt vollständig, bezüglich der axialen Erstreckung seines Stators entlang der Rotationsachse im Hülseninnenraum des Flexsplines des Antriebswellgetriebes angeordnet ist. Der Antriebselektromotor wird also bevorzugt in Radialrichtung von der Hülse des Flexsplines zumindest teilweise und bevorzugt vollständig umschlossen. Die Angabe bezüglich des Antriebselektromotors bezieht sich auf die axiale Erstreckung des Stators entlang der Rotationsachse und insbesondere auch auf die axiale Erstreckung des Rotors. Gemäß einer bevorzugten Ausführungsform ist daher der Antriebselektromotor über die gesamte axiale Erstreckung seines Rotors und/oder Stators entlang der Rotationsachse in Radialrichtung der Rotationsachse von der Hülse des Flexsplines umgeben. Auf diese Weise wird der Hülseninnenraum konstruktiv für die Unterbringung des Elektromotors genutzt, wodurch Bauraum eingespart wird.

Die Eingangsantriebswelle ist bevorzugt drehfest (beispielsweise über einen später noch näher erläuterten Freilauf) mit einem langsam drehenden Getriebeteil des Antriebswellgetriebes, beispielsweise dem Flexspline oder dem Hohlrad, verbunden. Insbesondere ist die Eingangsantriebswelle mit dem Getriebeausgang des Antriebswellgetriebes drehfest verbunden. Bevorzugt ist es, dass die Eingangsantriebswelle drehfest mit dem Hohlrad des Antriebswellgetriebes oder direkt mit der Ausgangsabtriebswelle verbunden ist und die aus menschlicher Muskelkraft stammende Antriebsenergie somit über das Hohlrad oder die Ausgangsabtriebswelle in den Antriebsstrang einbringt bzw. einleitet. Da die Eingangsantriebswelle drehfest mit der Ausgangsabtriebswelle verbunden ist, sei es direkt oder indirekt über das Hohlrad, ist eine Drehzahl der Eingangsantriebswelle eins zu eins auf die Ausgangsabtriebswelle übertragbar.

Die Nutzung des Hohlrades als Getriebeausgang wie vorstehend beschrieben, ist ein weiterer konstruktiver Ansatz, die axiale Ausdehnung der Antriebseinheit möglichst gering zu gestalten. Grundsätzlich ist die bei jedem Antrieb mit einem Wellgetriebe hilfreich, um axial Bauraum zu sparen, beispielsweise unabhängig vom verwendeten Getriebetyp, so lange dieses mit einem Hohlrad arbeitet, und der Konfiguration des Motors. Dieser Aspekt stellt daher neben der Weiterbildung des in dieser Anmeldung konkret beschriebenen Konzepts eine eigenständige, separate Erfindung dar, die unabhängig von den baulichen und funktionalen Merkmalen der hierin beschriebenen Ausführungsbeispiele ist und separat beansprucht werden kann.

Beim Antriebselektromotor handelt es sich bevorzugt um einen Synchronmotor, insbesondere Dreiphasen-Synchronmotor, bevorzugt in Außenläufer-Bauweise. Dieser zeichnet sich in der durch die Erfindung beschriebenen Ausführungsform durch besonders schmale Abmessungen aus.

Eine weitere bevorzugte Ausgestaltung der Erfindung betrifft ebenfalls eine möglichst platzsparende Anordnung des Antriebselektromotors. Hierfür ist es bevorzugt vorgesehen, dass der Wellgenerator, der Flexspline und das Hohlrad des Antriebswellgetriebes in einer senkrecht zur Rotationsachse liegenden Getriebeebene einander überlappend angeordnet sind. Der Wellgenerator, der Flexspline und das Hohlrad des Antriebswellgetriebes sind also in Radialrichtung der Rotationsachse aufeinander folgend, insbesondere in dieser Reihenfolge von innen nach außen und/oder in Radialrichtung insbesondere fluchtend, angeordnet. Darüber hinaus ist der Flexspline, insbesondere die Hülse des Flexsplines, in einer senkrecht zur Rotationsachse liegenden Lagerebene gegenüber einem Gegenlager rotierbar gelagert. Das Gegenlager bezeichnet im Kontext der vorliegenden Anmeldung beispielsweise einen ortsfesten beziehungsweise statischen Teil der Antriebseinheit und ist beispielsweise gemeinsam mit einem Gehäuse oder Gehäuseteil feststehend ausgebildet. Bevorzugt ist nun der Antriebselektromotor zumindest teilweise und bevorzugt vollständig zwischen der Getriebeebene und der Lagerebene angeordnet. Auch dies bezieht sich insbesondere auf die axiale Erstreckung des Rotors und/oder Stators des Antriebselektromotors entlang der Rotationsachse.

Damit der Antriebselektromotor der erfindungsgemäßen Antriebseinheit insbesondere von einer nachstehend noch näher erläuterten Steuereinheit besonders präzise angesteuert werden kann, ist es bevorzugt vorgesehen, dass wenigstens ein, insbesondere berührungsfreier, Drehzahl- und/oder Drehwinkelsensor, insbesondere Hallsensor, am Antriebselektromotor vorgesehen ist. Um die entsprechenden Sensoren möglichst platzsparend in der Antriebseinheit unterzubringen, ist es darüber hinaus ergänzend oder alternativ vorgesehen, dass der wenigstens eine, insbesondere berührungsfreie, Drehzahl- und/oder Drehwinkelsensor insbesondere im Hülseninnenraum des Flexsplines angeordnet ist. Auch der Sensor ist in Radialrichtung der Rotationsachse daher bevorzugt von der Hülse des Flexsplines umgeben. Darüber hinaus befindet sich der Sensor bevorzugt ebenfalls zwischen der Getriebeebene und der Lagerebene.

Aufgrund der vielen zueinander rotierbaren Komponenten der Antriebseinheit und der Rotierbarkeit verschiedener Komponenten gegenüber dem feststehenden Gehäuse, sind eine Vielzahl von Drehlagern, beispielsweise (Rillen-)Kugellagern, notwendig, um diese Komponenten, insbesondere um die Rotationsachse, gegeneinander rotierbar anzuordnen. Die Anordnung erfolgt dabei bevorzugt in der Weise, dass diese zueinander rotierbaren Element allesamt um eine gemeinsame Rotationsachse, insbesondere die Tretlagerachse oder die Drehachse einer Fahreinrichtung, rotierbar sind. Herausfordernd in der konkreten konstruktiven Umsetzung hieran ist, dass diese Drehlager, um ihre jeweilige Funktion erfüllen zu können, naturgemäß eine minimale Breite aufweisen, die, insbesondere über viele Drehlager in Axialrichtung kumuliert, einen signifikanten Beitrag zur Gesamtbreite der Antriebseinheit leisten. Die Erfindung sieht daher ebenfalls vor, durch die geschickte Anordnung der Drehlager Bauraum in axialer Richtung der Rotationsachse einzusparen. So ist es beispielsweise bevorzugt vorgesehen, dass ein Drehlager für die Ausgangsabtriebswelle und ein Drehlager für die Eingangsantriebswelle in einer gemeinsamen senkrecht zur Rotationsachse liegenden Wellenlagerebene angeordnet sind. Diese beiden Drehlager sind in Radialrichtung zur Rotationsachse somit bevorzugt übereinander bzw. einander überlappend angeordnet. Besonders bevorzugt ist es, dass die beiden Drehlager als Kugellager mit gleicher axialer Erstreckung entlang der Rotationsachse ausgebildet sind und sich in Radialrichtung der Rotationsachse vollständig überlappen. Die beiden Drehlager werden also nicht in Axialrichtung nebeneinander sondern in Radialrichtung nebeneinander angeordnet, so dass die Breite eines der Drehlager entlang der Rotationsachse eingespart wird. Diese Anordnung der Drehlager für die Ausgangsabtriebswelle und für die Eingangsantriebswelle ist grundsätzlich bei jedem Antrieb hilfreich, um axial Bauraum zu sparen, beispielsweise unabhängig von den verwendeten Getriebetypen und der Konfiguration der Motoren. Dieser Aspekt stellt daher neben der Weiterbildung des in dieser Anmeldung konkret beschriebenen Konzepts eine eigenständige, separate Erfindung dar, die unabhängig von den baulichen und funktionalen Merkmalen der hierin beschriebenen Ausführungsbeispiele ist und separat beansprucht werden kann.

Um die axiale Breite beziehungsweise Ausdehnung der Antriebseinheit zu begrenzen, ist es bekannt, beispielsweise mehrere Getriebe oder mehrere Motoren nicht in Axialrichtung, sondern in Radialrichtung bezüglich der Rotationsachse nebeneinander anzuordnen. Um die Ausdehnung der Antriebseinheit quer zur Fahrtrichtung des Fortbewegungsmittels zu begrenzen, wurde mit anderen Worten eine Ausdehnung in Fahrtrichtung oder in Vertikalrichtung in Kauf genommen. Das Ziel der vorliegenden Erfindung ist nun allerdings, dass eine derartige Vergrößerung der Antriebseinheit in Fahrtrichtung und/oder in Vertikalrichtung vermieden wird. Es ist daher bevorzugt vorgesehen, dass der Antriebselektromotor und das Antriebswellgetriebe koaxial zueinander um die Rotationsachse angeordnet sind. Sie weisen also insbesondere dieselbe Rotationsachse auf. Eine derartige Anordnung ist nicht nur besonders kompakt, sondern hat ebenfalls Vorteile bezüglich des Kraftflusses durch den Antriebsstrang.

Wie bereits erläutert, wird erfindungsgemäß das Hohlrad des Antriebswellgetriebes als Getriebeausgang bzw. Abtrieb genutzt. Die aus menschlicher Muskelkraft stammende Antriebsenergie kann daher entweder über das Hohlrad oder die Ausgangsabtriebswelle eingebracht werden. Bevorzugt ist vorgesehen, dass die Eingangsantriebswelle zumindest in einer Drehrichtung drehfest mit dem Hohlrad oder der Ausgangsabtriebswelle verbunden ist und die aus menschlicher Muskelkraft stammende Energie hierdurch in den Antriebsstrang eingebracht wird. Die Eingangsantriebswelle ist dazu bevorzugt über einen Freilauf mit dem Hohlrad des Antriebswellgetriebes oder der Ausgangsabtriebswelle verbunden, wobei der Freilauf insbesondere in einer Vorwärts-Drehrichtung beziehungsweise Vorwärts-Fahrtrichtung der Eingangsantriebswelle sperrt beziehungsweise eine drehfeste Verbindung herstellt und dadurch die entsprechende Rotationsbewegung über den Freilauf auf das Hohlrad und/oder die Ausgangsabtriebswelle überträgt. Der Freilauf ermöglicht es darüber hinaus, beispielsweise frei rückwärts treten zu können, oder, dass die Ausgangsabtriebswelle durch den Antriebselektromotor schneller rotiert wird als die von einem Fahrer gedrehte Eingangsantriebswelle.

Ein weiterer Freilauf ist bevorzugt am Flexspline des Antriebswellgetriebes angeordnet. Insbesondere ist der Flexspline des Antriebswellgetriebes über einen Freilauf an einem stationären Gehäuseteil gelagert. Dieser Freilauf dreht insbesondere dann frei, wenn der Flexspline in Vorwärts-Fahrtrichtung rotiert, und blockiert insbesondere dann, wenn der Flexspline entgegen der Vorwärts-Fahrtrichtung rotieren würde. Fährt das Fortbewegungsmittel vorwärts, so rotieren die Ausgangsabtriebswelle und das Hohlrad vorwärts. Dadurch wird auch der Flexspline des Antriebswellgetriebes durch seine Verzahnung mit dem Hohlrad vorwärts mitgedreht. Da der Freilauf in dieser Rotationsrichtung frei dreht, muss nicht der Rotor des Antriebselektromotors mitgeschleppt werden. Wird daher beispielsweise ohne Unterstützung durch den Antriebselektromotor, beispielsweise aus reiner menschlicher Muskelkraft, gefahren, so kann dies mit niedrigem Pedalwiderstand erfolgen. Wird dagegen der Antriebselektromotor betrieben, um ein Unterstützungsdrehmoment auf das Hohlrad und damit die Ausgangsabtriebswelle zu übertragen, so wird der Flexspline über den Freilauf am stationären Gehäuse abgestützt, sodass die Antriebsenergie vom Antriebselektromotor über den Wellgenerator und den Flexspline auf das Hohlrad und damit die Ausgangsabtriebswelle übertragen wird.

Wie bereits beschrieben, ist der Freilauf bevorzugt derart am Flexspline des Antriebswellgetriebes angeordnet, dass er dann freiläuft, wenn das Fortbewegungsmittel vorwärts fährt und der Antriebselektromotor keine oder nur eine geringe Antriebsenergie aufbringt. In diesen Situationen kann es gewünscht sein, den Antriebselektromotor als Generator zur Rekuperation von kinetischer Energie zu betreiben. Damit dies gelingt, ist es bevorzugt vorgesehen, dass der Freilauf schaltbar ausgebildet ist zwischen einer in eine Drehrichtung freilaufenden Schaltstellung und einer in diese Drehrichtung greifenden bzw. nicht freilaufenden Schaltstellung. In dieser Drehrichtung wirkt der Freilauf somit mit anderen Worten als schaltbare Kupplung. Alternativ kann auch eine separate Kupplungseinheit vorgesehen sein, die eine drehfeste Verbindung zwischen dem Freilauf und einem stationären Gehäuseteil herstellen kann, wodurch der Freilauf ebenfalls umgangen wird und dasselbe Resultat eintritt. Auf diese Weise ist es möglich, dass der Antriebselektromotor als Generator betreibbar ist, der Antriebsenergie vom Hohlrad aufnimmt und in elektrische Energie umwandelt. Wird der Freilauf in seine nicht freilaufende Position geschaltet, so bedeutet dies, dass er auch in Vorwärts-Drehrichtung eine drehfeste Verbindung zwischen dem Flexspline und einem stationären Gehäuseteil herstellt. Dadurch wird der Flexspline blockiert und kann nicht rotieren. Auf diese Weise wird Antriebsenergie vom Hohlrad auf den Wellgenerator und damit den Antriebselektromotor übertragen, der dann als Generator wirkt und diese Antriebsenergie in elektrische Energie umwandelt, beispielswiese zum Aufladen eines Speichers für elektrische Energie. Auf diese Weise kann das Fortbewegungsmittel somit insbesondere auch unter Wiedergewinnung von elektrischer Energie abgebremst werden. Diese Nutzung eines schaltbaren Freilaufs und/oder einer separaten Kupplungseinheit zum Betrieb des Antriebselektromotors als Generator ist grundsätzlich mit jedem Antrieb realisierbar, beispielsweise unabhängig vom verwendeten Getriebetyp und der Konfiguration des Motors. Dieser Aspekt stellt daher neben der Weiterbildung des in dieser Anmeldung konkret beschriebenen Konzepts eine eigenständige, separate Erfindung dar, die unabhängig von den baulichen und funktionalen Merkmalen der hierin beschriebenen Ausführungsbeispiele ist und separat beansprucht werden kann.

Wie bereits zuvor für die Drehlager ausgeführt, besitzen auch die Freiläufe eine minimal notwendige axiale Erstreckung entlang der Rotationsachse. Es ist daher ebenfalls vorteilhaft, die Freiläufe mit jeweils zumindest einem Drehlager radial zur Rotationsachse überlappend anzuordnen, um deren gemeinsame Axialerstreckung insgesamt zu verkleinern. Es ist daher bevorzugt vorgesehen, dass ein Drehlager zwischen einem Gegenlager und dem Flexspline des Antriebswellgetriebes in einer senkrecht zur Rotationsachse liegenden Lagerebene mit einem Freilauf überlappend angeordnet ist. Insbesondere ist bevorzugt, dass sich die Drehlager und die Freiläufe mindestens zur Hälfte, bezogen auf ihre jeweilige Axialerstreckung entlang der Rotationsachse, bevorzugt mindestens zu zwei Dritteln und ganz besonders bevorzugt vollständig, überlappen. Das Gegenlager ist ein stationäres, also nicht mitrotierendes, Teil und beispielsweise mit anderen, stationären Gehäuseteilen der Antriebseinheit drehfest verbundenen.

Eine weitere Einsparung von axialer Breite der Antriebseinheit gelingt dadurch, dass bevorzugt ein Drehlager in einer senkrecht zur Rotationsachse liegenden Ebene zusammen mit dem Antriebswellgetriebe liegt. Das Drehlager überlappt also in Radialrichtung der Rotationsachse mit dem Antriebswellgetriebe. Beispielsweise kann es sich um das Drehlager des Rotors des Antriebselektromotors handeln. Ein derartiges Drehlager ist sowieso notwendig und muss daher platzsparend platziert werden. Gemäß einer bevorzugten Ausführungsform der Erfindung ist daher vorgesehen, dass der Wellgenerator, der Flexspline und das Hohlrad des Antriebswellgetriebes in einer senkrecht zur Rotationsachse liegenden Getriebeebene zusammen mit einem Drehlager für den Rotor des Antriebselektromotors, insbesondere bezüglich eines Gegenlagers, angeordnet ist. In dieser Ausführungsform ist das Drehlager des Rotors des Antriebselektromotors also in das Antriebswellgetriebe hinein verschoben und insbesondere mit diesem verschachtelt. Besonders bevorzugt hat das entsprechende Drehlager eine axiale Erstreckung, die der axialen Erstreckung weiterer Komponenten des Wellgetriebes entspricht, beispielsweise dem Wellgenerator oder dem Drehlager, insbesondere Kugellager, zwischen dem Wellgenerator und dem Flexspline. Bevorzugt überlappt sich das Drehlager mit diesen Elementen vollständig, gesehen in Radialrichtung und bezogen auf die axiale Erstreckung.

Vorstehend wurden bereits einige senkrecht zur Rotationsachse ausgerichteten Ebenen beschrieben, in denen jeweils verschiedene Komponenten der Antriebseinheit in radialer Überlappung zur Verringerung von axialer Ausdehnung der Antriebseinheit entlang der Rotationsachse angeordnet sind. Eine weitere derartige Ebene ist die Elektroniklagerebene, die ebenfalls senkrecht zur Rotationsachse ausgerichtet ist und in der ein Drehlager, insbesondere Kugellager, und eine Steuereinheit angeordnet ist. Das Drehlager ist beispielsweise zwischen dem stationären Gehäuse und der Kurbelwelle angeordnet, falls die Antriebseinheit um die Kurbelwelle angeordnet ist, oder das Drehlager ist zwischen einem stationären Gehäuseanteil, beispielsweise Achskörper, und dem rotierenden Nabengehäuse angeordnet, falls die Antriebseinheit an einer Radnabe angeordnet ist. Auf die elektronische Steuereinheit wird nachstehend noch näher eingegangen. Bezüglich einer optimalen Anordnung der Komponenten der Antriebseinheit zueinander ist es bevorzugt vorgesehen, dass in Richtung entlang der Rotationsachse die Wellenlagerebene, die Getriebeebene des Antriebswellgetriebes, die Lagerebene des Flexsplines des Antriebswellgetriebes und insbesondere auch die Elektroniklagerebene aufeinanderfolgend angeordnet sind. Hieraus ergibt sich eine besonders platzsparende Anordnung der jeweiligen Komponenten.

Wie vorstehend bereits angedeutet, kann die Antriebseinheit beispielsweise bei einem Fahrrad wohl in der Mitte des Rahmens im Bereich der Pedale, als auch an einer der Radnaben angeordnet sein. In einer bevorzugten Ausführungsform ist die Antriebseinheit als Mittelantriebseinheit ausgebildet, wobei insbesondere die Rotationsachse koaxial mit einer Tretachse angeordnet ist. Die Antriebseinheit ist dabei beispielsweise zwischen den Pedalen und insbesondere zwischen den Pedalkurbeln angeordnet. Die Antriebseinheit wird in dieser Anordnung von einer drehenden Achse, insbesondere der Kurbelwelle, durchdrungen und weist ein stationäres Gehäuse auf. In einer bevorzugten Alternative ist die Antriebseinheit als Nabenantriebseinheit ausgebildet, wobei insbesondere die Rotationsachse koaxial mit einer Radachse angeordnet ist. Die Antriebseinheit ist also an einer Radnabe angeordnet, beispielsweise am Hinterrad. In diesem Fall ist die Antriebseinheit von einem feststehenden Achskörper durchdrungen und weist ein rotierendes Nabengehäuse auf, welches die Rotationsbewegung über Speichen auf das Rad überträgt. Besonders bevorzugt ist die Antriebseinheit als Mittelantriebseinheit ausgebildet, da durch die zentrale Lage am Rahmen beispielsweise eines Fahrrades eine besonders gute Gewichtsverteilung mit tiefem und entlang der Längssachse mittig angeordnetem Schwerpunkt erreicht wird.

Es ist immer vorteilhaft, die axiale Erstreckung der Antriebseinheit möglichst gering auszubilden. Von besonderem Vorteil ist dies allerdings ebenfalls bei der Ausbildung der Antriebseinheit als Mittelantriebseinheit, d.h. im Bereich der Tretlagerachse. Wie eingangs erwähnt, wird angestrebt, dass die Kurbelarme der Pedale des Fahrzeugs aufgrund der durchschnittlichen menschlichen Anatomie idealerweise einen Abstand von 140-180 mm zueinander aufweisen. Dies kann mit den vorstehend beschriebenen Maßnahmen eingehalten werden. Je nachdem, wie konsequent die Maßnahmen umgesetzt werden, können sogar noch engere Abmaßungen erreicht werden. So ist es bevorzugt, dass die Erstreckung der Antriebseinheit entlang der Rotationsachse maximal 100 mm, bevorzugt maximal 85 mm, besonders bevorzugt maximal 70 mm und insbesondere beispielsweise maximal 60 mm, beträgt. Die Kurbelarme der Pedale wiederum sollten bevorzugt maximal 150 mm, besonders bevorzugt maximal 130 mm und ganz besonders bevorzugt maximal 110 mm voneinander beabstandet sein. Auf diese Weise kann auch bei der Ausbildung der Antriebseinheit als Mittelantriebseinheit ein angenehmes und anatomisch korrektes Pedalieren ermöglicht werden.

In einer bevorzugten Ausführungsform ist eine Steuereinheit zur Steuerung des Antriebselektromotors vorgesehen. Die elektronische Steuereinheit steuert insbesondere die Drehzahl und/oder die Drehrichtung und/oder das Drehmoment des Elektromotors an. Beispielsweise steuert die Steuereinheit den Elektromotor über ein hinterlegtes Drehfeld, beispielsweise Dreiphasendrehfeld. In derartigen Drehfeldern sind sowohl das Drehzahl- als auch das Drehmomentverhalten des Motors hinterlegt. Die entsprechende Ansteuerung des Elektromotors gehört zum Stand der Technik und ist dem Fachmann bekannt, weshalb hier nicht näher auf diese eingegangen wird. Die Steuereinheit kann eine ganze Reihe von verschiedenen Merkmalen und Funktionen aufweisen, wie nachstehend erläutert.

Rein baulich ist die Steuereinheit in die Antriebseinheit integriert. Sie liegt in der bereits beschriebenen senkrecht zur Rotationsachse ausgerichteten Elektroniklagerebene, beispielsweise zusammen mit einem Drehlager für eine Kurbelwelle. Sie ist daher nicht einfach außen an die Antriebseinheit angesetzt, sondern mit den Getriebeteilen der Antriebseinheit verschachtelt, was zu einer effizienten Nutzung des Bauraumes beiträgt.

Zur Steuerung der Funktionen der Antriebseinheit müssen verschiedene Größen bestimmt werden, die den aktuellen Betriebszustand widerspiegeln, und die die Steuereinheit bei der Steuerung des Elektromotors berücksichtigt. So ist die Steuereinheit beispielsweise mit einem Drehwinkel- und/oder Drehzahl- und/oder Drehmomentsensor an der Eingangsantriebswelle verbunden. Die Eingangsantriebswelle wird im Betrieb vom Fahrer, beispielsweise durch Treten der Pedale, angetrieben, sodass die entsprechenden Größen von der Steuereinheit genutzt werden können, um beispielsweise den Willen des Fahrers zu ergründen, der beispielsweise mehr tritt, wenn er beschleunigen möchte. Darüber hinaus ist die Steuereinheit bevorzugt mit einem Fahrgeschwindigkeitssensor verbunden, der insbesondere in oder an der Nabe des Hinterrades, am Hinterrad beziehungsweise dessen Speichen oder an der Bremsscheibe angeordnet ist, und der die Fahrgeschwindigkeit des Fortbewegungsmittels insgesamt bestimmt. Eine bevorzugte Ausführungsform sieht vor, dass der Fahrgeschwindigkeitssensor in die Antriebseinheit integriert und zusammen mit dieser am Fortbewegungsmittel angeordnet ist. In diesem Fall wird die Fahrgeschwindigkeit beispielsweise an der Ausgangsabtriebswelle bestimmt. Dies ist insbesondere dann möglich, wenn das angetriebene Rad des Fortbewegungsmittels, beispielsweise das Hinterrad, über keinen eigenen Freilauf verfügt und das Zahnmittelzahnrad beziehungsweise das Kettenrad an der Antriebseinheit immer vom Zugmittel mit der Drehzahl des angetriebenen Rades rotiert wird. Über den Fahrgeschwindigkeitssensor kann die Steuereinheit beispielsweise überprüfen, ob die Fahrgeschwindigkeit über oder unter einer Maximalgeschwindigkeit liegt, über der beispielsweise keine Unterstützung mehr aus den Elektromotoren auf die Ausgangsabtriebswelle übertragen werden darf. Die Steuereinheit übernimmt dann die entsprechende Ansteuerung des Elektromotors und auch dessen Abschaltung bei Überschreiten einer, beispielsweise gesetzlich vorgegebenen, Maximalgeschwindigkeit. Weiter ist die Steuereinheit bevorzugt mit einem Drehzahl- und/oder Drehwinkelsensor, insbesondere Hallsensor, am Antriebselektromotor verbunden. Bevorzugt ist die Steuereinheit ebenfalls mit einem Stromstärkesensor für den Antriebselektromotor verbunden. Aus der Stromstärke kann die Steuereinheit auf das Drehmoment des Elektromotors schließen. Zusammen mit der Drehzahl kann die Steuereinheit hieraus die Leistung des Elektromotors berechnen und diese entsprechend regeln.

Eine Hauptfunktion der Steuereinheit liegt bevorzugt darin, dass sie die Drehzahlen und Drehmomente des Antriebselektromotors derart steuert, dass die summierte Antriebsenergie beziehungsweise Antriebsleistung inklusive der aus menschlicher Muskelkraft stammenden Energie beziehungsweise Leistung an der Ausgangsabtriebswelle der Energieanforderung beziehungsweise Leistungsanforderung der Antriebseinheit entspricht. Die entsprechende Energie- beziehungsweise Leistungsanforderung wird von der Steuereinheit anhand der ihr zur Verfügung stehenden Messsignale bestimmt, beispielsweise unter Berücksichtigung des Tretverhaltens des Fahrers, aus dem beispielsweise ein Beschleunigungswunsch abgeleitet werden kann. Der Grad der elektromotorischen Unterstützung des Fahrers kann beispielsweise an der Steuereinheit eingestellt werden und wird von dieser berücksichtigt. Bevorzugt steuert die Steuereinheit beispielsweise die Drehzahl des Antriebselektromotors proportional zur Fahrgeschwindigkeit. Auf diese Weise übernimmt der Antriebselektromotor bei sämtlichen Fahrgeschwindigkeiten immer den gleichen Anteil der notwendigen Antriebsenergie beziehungsweise Antriebsleistung. Darüber hinaus ist bevorzugt vorgesehen, dass die Steuereinheit je nach Drehrichtung einer durch menschliche Muskelkraft angetriebenen Welle, beispielsweise der Kurbelwelle oder der Eingangsantriebswelle, eine Antriebsunterstützungsfunktion oder eine Bremsfunktion aktiviert. Auf diese Weise realisiert die Antriebseinheit beispielsweise eine Rücktrittbremse, indem aus einem Rückwärtstreten des Fahrers ein Bremskommando abgeleitet wird. In dieser Situation aktiviert die Steuereinheit beispielsweise den zuvor bereits beschriebenen schaltbaren Freilauf und betreibt den Antriebselektromotor als Generator zur Rekuperation von kinetischer Energie in elektrische Energie, wodurch das Fortbewegungsmittel abgebremst wird.

Bei Pedelecs mit Hinterradfederung gibt es einen Effekt, der als Pedalrückschlag oder Pedalkickback bezeichnet wird. Dieser beschreibt, dass es bei jedem Einfedervorgang der Federung automatisch zu einer Drehung des Zugmittelzahnrads, beispielsweise des Kettenblattes, kommt. Hierdurch werden ebenfalls die Kurbelwelle und die Kurbelarme zusammen mit den Pedalen gedreht, was von einem Fahrer als unangenehm wahrgenommen wird. Die Steuereinheit ist nun bevorzugt dazu ausgebildet, den durch die Einfederung des Fortbewegungsmittels verursachten Pedalrückschlag durch eine Ansteuerung des Antriebselektromotors teilweise und insbesondere vollständig auszugleichen. Hierfür ist sie mit einem Federwegsensor des Fortbewegungsmittels verbunden, der insbesondere die Einfederung an sich und deren Maß bestimmt und an die Steuereinheit weiterleitet. Durch die Ansteuerung des Antriebselektromotors kann die Steuereinheit eine Drehung der Kurbelwelle und damit auch der Pedale bewirken. Anhand des bestimmten Federweges ist die Steuereinheit nun dazu ausgebildet, den Antriebselektromotor so anzusteuern, dass dieser der Bewegung der Kurbelwelle durch den Pedalrückschlag entgegenwirkt. Eine Drehung der Pedale unterbleibt dadurch trotz der Einfederung des Hinterrades. Dieser Ausgleich des Pedalkickbacks ist grundsätzlich mit jedem Antrieb realisierbar, der die Stellung der Pedale beeinflussen kann. Dieser Aspekt stellt daher neben der Weiterbildung des in dieser Anmeldung konkret beschriebenen Konzepts eine eigenständige, separate Erfindung dar, die unabhängig von den baulichen und funktionalen Merkmalen der hierin beschriebenen Ausführungsbeispiele ist und separat beansprucht werden kann.

Zur Information des Fahrers kann die Steuereinheit ebenfalls mit einer Anzeigeeinheit verbunden sein. Die Anzeigeeinheit wiederum könnte grundsätzlich beispielsweise über Kabel mit der Steuereinheit verbunden und an einer beliebigen Stelle des Fortbewegungsmittels angeordnet sein, beispielsweise an der Lenkerstange. Es ist allerdings bevorzugt, dass die Anzeigeeinheit ebenfalls innerhalb des Gehäuses der Antriebseinheit angeordnet ist, und zwar derart, dass sie durch ein Sichtfenster in der Antriebseinheit von außen sichtbar ist. Sie befindet sich daher zusammen mit dem Sichtfenster bevorzugt auf der einer Straßenoberfläche abgewandten Seite der Antriebseinheit, sprich, auf der Oberseite der Antriebseinheit. Das Sichtfenster ist aus einem transparenten Material, beispielsweise Glas oder einem Kunststoff, hergestellt. Die Anzeigeeinheit umfasst bevorzugt wenigstens eine Anzeige einer Information über den Betriebszustand des Fortbewegungsmittels, beispielsweise die aktuelle Fahrgeschwindigkeit oder einen Batteriefüllstand. Die Anzeige ist bevorzugt leuchtend ausgebildet und umfasst beispielsweise LEDs. Im Betrieb des Fortbewegungsmittels kann der Fahrer beispielsweise einen Blick nach unten auf die Antriebseinheit werfen und die entsprechenden Informationen an der Anzeigeeinheit ablesen. Die Anzeigeeinheit in Verbindung mit einem Sichtfenster ist grundsätzlich bei jeder Antriebseinheit realisierbar, die über eine Elektronik verfügt. Dieser Aspekt stellt daher neben der Weiterbildung des in dieser Anmeldung konkret beschriebenen Konzepts eine eigenständige, separate Erfindung dar, die unabhängig von den baulichen und funktionalen Merkmalen der hierin beschriebenen Ausführungsbeispiele ist und separat beansprucht werden kann.

Wie bereits erläutert wurde, kann die Steuereinheit durch eine Ansteuerung des Antriebselektromotors die Drehposition der Kurbelwelle und damit der Pedale steuern. Beispielsweise beim Fahrradfahren ist es typisch, dass bei jedem Anhalten zumindest eines der Pedale in eine Position gebracht werden muss, die nach vorne und nach oben ausgerichtet ist. Blickt man seitlich auf die Kurbelwelle, derart, dass eine Vorwärtsfahrrichtung einer Drehung der Kurbelwelle und der Pedale im Uhrzeigersinn entspricht, so sollte eines der Pedale also beispielsweise auf die 14:00 Uhr-Position gebracht werden. In dieser Anfahrstellung des Pedals kann der Fahrer bequem losfahren und schnell beschleunigen. Auch diese Positionierung, die konventionell vom Fahrer durch ein rückwärts Treten der Pedale eingestellt werden muss, kann von der Steuereinheit eingestellt werden. So ist es bevorzugt vorgesehen, dass die Steuereinheit die Eingangsantriebswelle durch eine Ansteuerung des Antriebselektromotors in eine Anfahrstellung bringt. Diese Funktion wird beispielsweise immer dann ausgeführt, wenn die Steuereinheit einen Stillstand des Fortbewegungsmittels detektiert. Das Fortbewegungsmittel wird auf diese Weise immer automatisch startklar gemacht, ohne dass der Fahrer sich hierum kümmern muss. Diese Positionierung eines Pedals in eine Anfahrstellung ist grundsätzlich mit jedem Antrieb realisierbar, der die Stellung der Pedale beeinflussen kann. Dieser Aspekt stellt daher neben der Weiterbildung des in dieser Anmeldung konkret beschriebenen Konzepts eine eigenständige, separate Erfindung dar, die unabhängig von den baulichen und funktionalen Merkmalen der hierin beschriebenen Ausführungsbeispiele ist und separat beansprucht werden kann.

Die vorliegende Erfindung bezieht sich grundsätzlich auf sämtliche gattungsgemäßen Fortbewegungsmittel, die zumindest zeitweise gleichzeitig durch aus menschlicher Muskelkraft und elektromotorisch bereitgestellter Antriebsenergie antreibbar sind. Ein besonderer Fokus und daher eine bevorzugte Ausführungsform sieht vor, dass das Fortbewegungsmittel ein ein-, zwei- oder dreispuriges Fahrzeug, insbesondere Elektrofahrrad, Pedelec, E-Bike, Cargobike, Lastenrad oder Transportrad ist. Das Fortbewegungsmittel weist daher den typischen Aufbau dieser genannten Ausführungsbeispiele auf. Beispielsweise umfasst das Fortbewegungsmittel einen Rahmen, insbesondere mit Oberrohr und/oder Unterrohr, sowie bevorzugt ein Vorderrad und ein Hinterrad. Das Vorderrad ist über ein Lenkrohr beziehungsweise Standrohr mit dem Oberrohr und/oder dem Unterrohr verbunden. In Längsrichtung des Fortbewegungsmittels auf Höhe der Tretachse gesehen ist darüber hinaus ein Sattelrohr angeordnet, welches das Oberrohr mit dem Unterrohr verbindet und einen Sattel für den Bediener trägt. Vom Sattelrohr erstrecken sich zwei Sitzstreben weiter nach hinten und sind an der Radachse des Hinterrades miteinander verbunden. Das Hinterrad ist an dem Sitzstreben gelagert, wodurch sich hier die Radachse des Hinterrades bildet. Um die für den Betrieb des Antriebselektromotors notwendige elektrische Energie zur Verfügung zu stellen, umfasst das Fortbewegungsmittel bevorzugt einen elektrischen Energiespeicher, beispielsweise eine Batterie. Der elektrische Energiespeicher ist bevorzugt im Oberrohr und/oder im Unterrohr angeordnet. Insbesondere das Vorderrad des Fortbewegungsmittels ist lenkbar ausgebildet, beispielsweise durch eine Rotation des Lenkrohres beziehungsweise Standrohres durch eine vom Bediener durchgeführte Drehung eines Lenkers an dessen oberen Ende. Darüber hinaus umfasst das Fortbewegungsmittel bevorzugt Pedale, die über Kurbelarme um die Tretachse rotierbar ausgebildet sind und die insbesondere drehfest mit der Eingangsantriebswelle verbunden sind. Wie vorstehend bereits beschrieben, kann die Antriebseinheit entweder als Mittelantriebseinheit an der Tretachse oder als Nabenantriebseinheit an der Radachse des Hinterrades angeordnet sein.

Die Erfindung wird nachstehend anhand der in den Figuren gezeigten Ausführungsbeispiele näher erläutert. Es zeigen schematisch:
- Figur 1:: eine Seitenansicht eines Fortbewegungsmittels mit Mittelantriebseinheit;
- Figur 2:: eine Seitenansicht eines Fortbewegungsmittels mit Nabenantriebseinheit;
- Figur 3:: eine Außenansicht, insbesondere Draufsicht, auf die Mittelantriebseinheit;
- Figur 4:: eine Außenansicht, insbesondere Draufsicht, auf die Nabenantriebseinheit;
- Figur 5:: einen Querschnitt durch ein Wellgetriebe;
- Figur 6:: eine Schnittansicht entlang der Rotationsachse durch eine als Mittelantriebseinheit ausgebildete Antriebseinheit.

Gleiche beziehungsweise gleich wirkende Bauteile sind mit den gleichen Bezugszeichen beziffert. Sich wiederholende Bauteile sind nicht in jeder Figur gesondert bezeichnet.

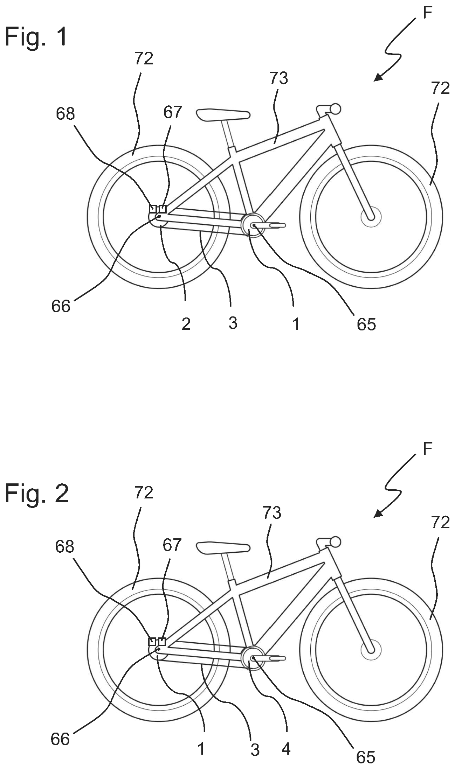

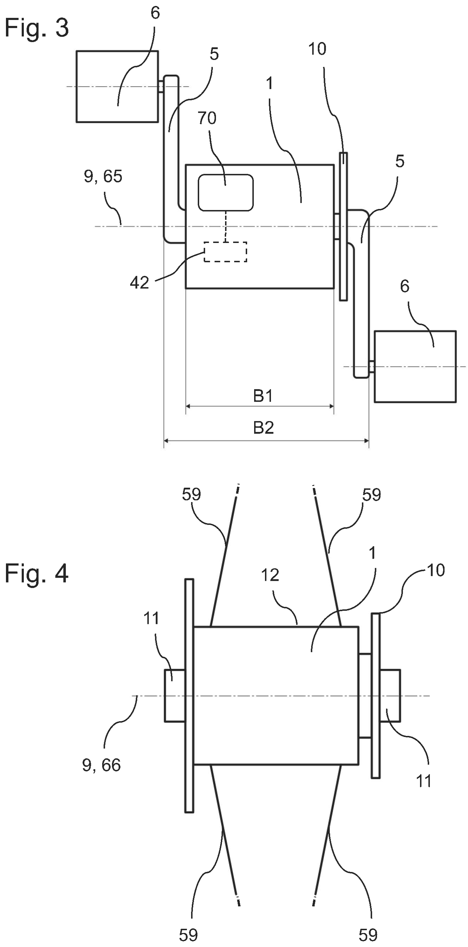

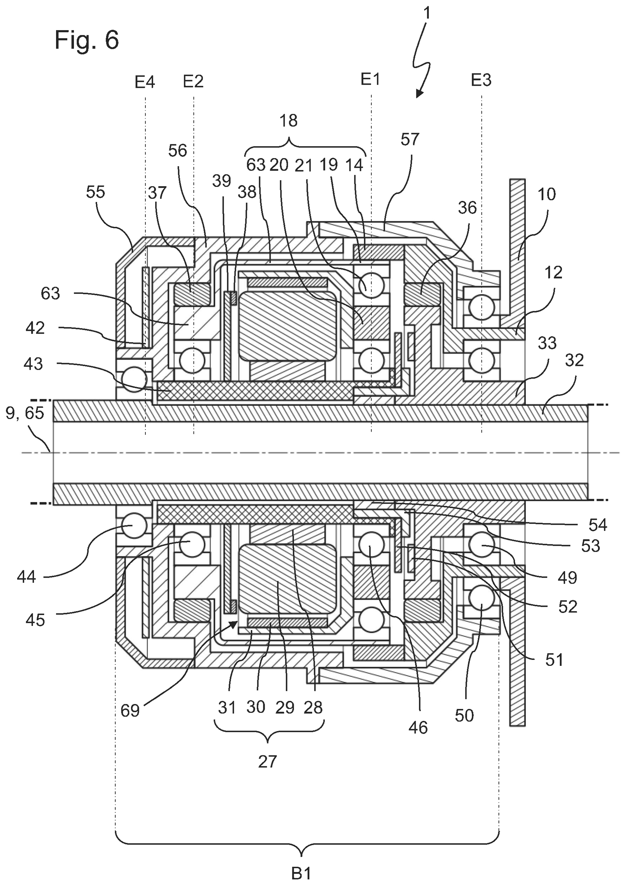

Die Figuren 1 und 2 zeigen jeweils ein Fortbewegungsmittel F, konkret ein Fahrrad, insbesondere Pedelec. Es kann gleichzeitig elektromotorisch und mit menschlicher Muskelkraft angetrieben werden, insbesondere in der Art, dass der Antrieb aus menschlicher Muskelkraft durch einen Elektromotor unterstützt wird. Das Fortbewegungsmittel F umfasst in bekannter Weise einen Rahmen 73 und zwei Fahreinrichtungen 72, konkret ein Vorderrad und ein Hinterrad. In der Mitte und am unteren Ende des Rahmens 73 befindet sich die Tretachse 65. An der Verbindungsstelle des Rahmens 73 mit dem Hinterrad liegt die Radachse 66. In Figur 1 ist eine Ausführungsform gezeigt, bei der die Antriebseinheit 1 als Mittelantriebseinheit ausgebildet ist und auf der Tretachse 65 liegt. Menschliche Muskelkraft wird direkt über die Kurbelwelle in die Antriebseinheit 1 eingebracht. Der Getriebeausgang der Antriebseinheit 1 ist als Zugmittelzahnrad 10 (siehe Figuren 3 und 6) ausgebildet und über ein Zugmittel 3, beispielsweise eine Kette, mit der Hinterradnabe 2 verbunden. Bei der Ausführungsform gemäß Figur 2 ist die Antriebseinheit 1 als Nabenantriebseinheit ausgebildet und auf der Radachse 66 angeordnet. Der Getriebeausgang der Antriebseinheit 1 ist in diesem Fall als Nabengehäuse ausgebildet, dessen Rotationsbewegung über die Speichen 59 auf das Hinterrad übertragen werden (siehe Figur 4). Die Antriebseinheit 1 ist über das Zugmittel 3 mit dem Tretlager 4 verbunden, über das menschliche Muskelkraft in die Antriebseinheit 1 eingebracht wird.

Die Figuren 3 und 4 zeigen jeweils eine Draufsicht auf die Antriebseinheit 1 von außen. Figur 3 zeigt die Antriebseinheit 1 als Mittelantriebseinheit. Die Rotationsachse 9 der Antriebseinheit 1 liegt auf der Tretachse 65, um die die Kurbelarme 5 und die Pedale 6 des Fortbewegungsmittels F während einer Tretbewegung durch einen Bediener rotieren. Zur Übertragung der Rotationsbewegung auf die Hinterradnabe 2 dient das Zugmittelzahnrad 10. Die Breite der Antriebseinheit 1 ist mit B1 bezeichnet. Der Abstand der Kurbelarme 5 ist mit B2 bezeichnet. Um ein angenehmes und auf die menschliche Anatomie angepasstes Treten der Pedale 6 zu ermöglichen, sollte der Abstand B2 der Kurbelarme 5 zwischen 140 und 180 mm liegen. Die Breite B1 der Antriebseinheit 1 muss deshalb entsprechend geringer sein. Darüber hinaus zeigt Figur 3 die Steuereinheit 42, die in die Antriebseinheit 1 integriert ist. Die Steuereinheit 42 ist mit einer Vielzahl von Sensoren verbunden, um den Betriebszustand der Antriebseinheit 1 und des Fortbewegungsmittels F zu detektieren, wie nachstehend noch näher erläutert wird. Darüber hinaus ist die Steuereinheit 42 mit einer Anzeigeeinheiten 70, beispielsweise einem Leuchtdisplay, verbunden, die von außerhalb der Antriebseinheit 1 einsehbar ist. Beispielsweise ist die Anzeigeeinheit 70 hinter einem Sichtfenster im äußeren Gehäuse der Antriebseinheit 1 angeordnet. Die Anzeigeeinheit 70 kann daher von einem auf dem Fortbewegungsmittel F sitzenden Bediener durch einen Blick nach unten eingesehen werden. In Figur 4 ist eine Ausführungsform der Antriebseinheit 1 als Nabenantriebseinheit gezeigt. Die Rotationsachse 9 der Antriebseinheit 1 liegt daher auf der Radachse 66, um die das Hinterrad während der Fahrt des Fortbewegungsmittels F rotiert. Eine von den Pedalen 6 stammende Rotation wird über das Zugmittelzahnrad 10 auf die Antriebseinheit 1 übertragen. Während die Antriebseinheit 1 als Mittelantriebseinheit von einer rotierenden Kurbelwelle 32 (siehe Figur 6) durchdrungen wird, wird sie als Nabenantriebseinheit von einem stehenden Achskörper 11 durchdrungen, um den das Hinterrad rotiert. Als Getriebeausgang und damit als Ausgangsabtriebswelle 12 dient ein Teil des Nabengehäuses, welches um den Achskörper 11 rotiert und drehfest mit den Speichen 59 verbunden ist. Die Speichen 59 wiederum übertragen die Rotationsbewegung auf den Rest des Hinterrades.

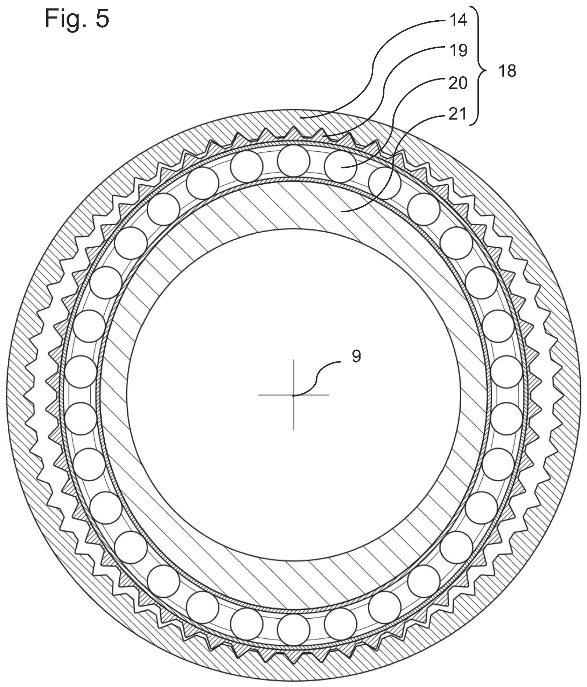

Figur 5 zeigt einen Querschnitt durch ein Wellgetriebe, konkret das Antriebswellgetriebe 18, wie es in der Erfindung zur Anwendung kommt. Das Antriebswellgetriebe 18 ist um die Rotationsachse 9 angeordnet und umfasst einen Wellgenerator 20, ein Drehlager 21, insbesondere ein (Rillen-)Kugellager, einen Flexspline 19 und ein Hohlrad 14. Das Hohlrad 14 und der Wellgenerator 20 sind als starre Bauteile ausgebildet, während der Flexspline 19 biegsam beziehungsweise elastisch ist. Der Wellgenerator 20 ist oval ausgebildet und der Flexspline 19 derart über das Drehlager 21 am Wellgenerator 20 gelagert, dass der Flexspline 19 sich aufgrund seiner Elastizität an die ovale Form des Wellgenerator 20 anpasst. Das Hohlrad 14 weist eine Innenverzahnung und der Flexspline 19 eine komplementäre Außenverzahnung auf, wobei der Flexspline 19 typischerweise weniger Zähne aufweist als das Hohlrad 14. Durch die ovale Form des Wellgenerators 20 wird die Außenverzahnung des Flexsplines 19 entlang der Hauptachse des Wellgenerators 20 in die Innenverzahnung des Hohlrades 14 gedrückt. Die elastische Verformung des Flexsplines 19 sorgt gleichzeitig dafür, dass dessen Außenverzahnung entlang der Nebenachse des Wellgenerators 20 außer Eingriff mit der Innenverzahnung des Hohlrades 14 gelangt. Rotiert nun der Wellgenerator 20, so dreht sich der Flexspline 19 in entgegengesetzter Drehrichtung mit einem Untersetzungsverhältnis von i = z_{H} / (z_{H} - z_{F}), wobei z_{H} die Zähnezahl des Hohlrades 14 und z_{F} die Zähnezahl des Flexsplines 19 ist. Wird der Flexspline 19 festgehalten, so rotiert das Hohlrad 14 mit der entsprechenden untersetzten Geschwindigkeit gleichsinnig wie der Wellgenerator 20. Derartige Wellgetriebe 18 sind Summiergetriebe und im Stand der Technik bekannt, weshalb sie hier nicht näher erläutert werden müssen.

Figur 6 zeigt einen Schnitt durch die Antriebseinheit 1 ausgebildet als Mittelantriebseinheit entlang der Rotationsachse 9 beziehungsweise der Tretachse 65. Die Tretachse 65 wird von der Kurbelwelle 32 definiert, die von einem Bediener über die Pedale 6 antreibbar ist und die die Antriebseinheit 1 entlang der Rotationsachse 9 durchdringt. Die Kurbelwelle 32 ist drehfest mit der Eingangsantriebswelle 33 verbunden, über die die vom Bediener aufgebrachte Antriebsenergie in das Getriebe der Antriebseinheit 1 eingebracht wird. Der Getriebeausgang wird durch die Ausgangsabtriebswelle 12 gebildet, die drehfest mit dem Zugmittelzahnrad 10, hier dem Kettenblatt, verbunden ist. Die Antriebseinheit 1 weist zwei Quellen für Antriebsenergie beziehungsweise Antriebsleistung auf: Zum einen menschliche Muskelkraft über die Eingangsantriebswelle 33 und zum anderen den Antriebselektromotor 27. Der Antriebselektromotor 27 ist über das Antriebswellgetriebe 18 in den Antriebsstrang der Antriebseinheit 1 eingebunden.

Dreht ein Bediener die Kurbelwelle 32 durch Treten in die Pedale 6, so dreht er dabei die Eingangsantriebswelle 33. Die Eingangsantriebswelle 33 ist über einen Freilauf 36 mit der Ausgangsabtriebswelle 12 verbunden. Der Freilauf 36 ist dabei derart ausgebildet, dass er bei einer Rotation der Eingangsantriebswelle 33 in Vorwärtsfahrtrichtung greift und eine drehfeste Verbindung zwischen der Eingangsantriebswelle 33 und der Ausgangsabtriebswelle 12 herstellt. Bei einer Rotation in Rückwärtsrichtung dagegen dreht der Freilauf 36 frei. Durch die Verbindung zwischen der Eingangsantriebswelle 33 und der Ausgangsabtriebswelle 12 wird die vom Bediener durch Treten der Pedale 6 eingebrachte Antriebsenergie auf die Ausgangsabtriebswelle 12 und damit das Zugmittelzahnrad 10 übertragen, und zwar mit einer Übersetzung von eins zu eins. Die Ausgangsabtriebswelle 12 ist darüber hinaus drehfest mit dem Hohlrad 14 verbunden.

Der Antriebselektromotor 27 umfasst einen Stator 28 mit Statorwicklungen 29 sowie einen Rotor 31 mit Permanentmagneten 30. Der Stator 28 ist auf einem stationären Gegenlager 43 angeordnet. Der Rotor 31 des Antriebselektromotors 27 ist drehfest, insbesondere einstückig, mit dem Wellgenerator 20 des Antriebswellgetriebes 18 verbunden. Der Antriebselektromotor 27 treibt daher den Wellgenerator 20 des Antriebswellgetriebes 18 an. Durch die Rotation des Wellgenerators 20 wird die Antriebsenergie des Antriebselektromotors 27 auf den Flexspline 19 übertragen. Der Flexspline 19 ist über einen Freilauf 37 an einem stationären Gehäuseteil 56 gelagert. Über den Flexspline 19 wird die Antriebsenergie auf das Hohlrad 14 des Antriebswellgetriebes 18 übertragen. Das Hohlrad 14 des Antriebswellgetriebes 18 ist drehfest mit der Ausgangsabtriebswelle 12 verbunden. Im Hohlrad 14 beziehungsweise der Ausgangsabtriebswelle 12 wird die Antriebsenergie beziehungsweise Antriebsleistung des Antriebselektromotors 27 sowie der über die Kurbelwelle 32 eingebrachten menschlichen Muskelkraft summiert und auf das Zugmittelzahnrad 10 übertragen. Der Antriebselektromotor 27 ist dazu ausgebildet, den Hauptteil der Antriebsenergie beziehungsweise Antriebsleistung für den Fahrbetrieb des Fortbewegungsmittels F liefern zu können. Um das Hohlrad 14 in Vorwärtsfahrrichtung anzutreiben, muss ebenfalls der Wellgenerator 20 in Vorwärtsfahrrichtung rotiert werden. Hieraus ergibt sich eine entgegengesetzte Drehrichtung des Flexsplines 19, also in Rückwärtsrichtung. Damit die Antriebsenergie vom Wellgenerator 20 auf das Hohlrad 14 übertragen wird, muss der Flexspline 19 daher in Rückwärtsrichtung an einem stationären Gehäuseteil abgestützt werden. Der Freilauf 37 ist daher derart ausgebildet, dass er bei einer rückwärts-Drehrichtung des Flexsplines 19 eine drehfeste Verbindung zwischen dem Flexspline 19 und dem stationären Gehäuseteil 56 herstellt. Eine Rückwärtsdrehung des Flexsplines 19 wird dadurch verhindert, wodurch die gesamte Antriebsenergie, die vom Antriebselektromotor 27 auf den Wellgenerator 20 aufgebracht wird, auf das Hohlrad 14 übergeht und zum Antrieb des Fortbewegungsmittels F zur Verfügung steht.

Wird dagegen der Antriebselektromotor 27 nicht betrieben oder nur langsamer betrieben, als das Hohlrad 14 beispielsweise vom Bediener durch menschliche Muskelkraft rotiert wird, so dreht die Ausgangsabtriebswelle 12 das Hohlrad 14 und durch dessen Verzahnung mit dem Flexspline 19 auch den Flexspline 19 in Vorwärtsfahrtrichtung mit. In der der Vorwärtsfahrtrichtung entsprechenden Drehrichtung des Flexsplines 19 ermöglicht der Freilauf 37 allerdings eine freie Rotation, wodurch im Zusammenspiel mit dem Drehlager 21 zwischen dem Flexspline 19 und dem Wellgenerator 20 keine Antriebsenergie auf den Wellgenerator 20 und damit den Rotor 31 des Antriebselektromotors 27 übertragen wird. Der Antriebselektromotor 27 muss daher vom Fahrer beim Pedalieren durch reine Muskelkraft nicht mitgeschleppt werden, wodurch ein leichtes, angenehmes Treten der Pedale 6 ermöglicht wird.

Gemäß einer bevorzugten Ausführungsform der Erfindung ist der Freilauf 37 als schaltbarer Freilauf 37 ausgebildet. Dies bedeutet, dass er von der Steuereinheit 42 angesteuert werden kann, und zwar derart, dass er in beiden Drehrichtungen eine drehfeste Verbindung zwischen dem Flexspline 19 und dem stationären Gehäuseteil 56 herstellt. Alternativ kann diese drehfeste Verbindung durch eine nicht dargestellte separate Kupplungseinheit erreicht werden. Wird der Flexspline 19 hierdurch auch in einer vorwärts-Drehrichtung blockiert, so wird Antriebsenergie vom Hohlrad 14 auf den Wellgenerator 20 und damit den Rotor 31 des Antriebselektromotors 27 übertragen. Es ist daher dann möglich, den Antriebselektromotor 27 als Generator zu betreiben und Rotationsenergie aus dem Hohlrad 14 in elektrische Energie umzuwandeln, die beispielsweise in eine Batterie eingespeist werden kann. Durch den Betrieb des Antriebselektromotors 27 als Generator, wird das Fortbewegungsmittel F abgebremst, sodass dieser Betrieb auch als Bremse benutzt werden kann.

Die vorliegende Erfindung zeichnet sich durch eine besonders schmale Bauweise entlang der Rotationsachse 9 aus. Hierfür umfasst die Antriebseinheit 1 eine Reihe von baulichen Besonderheiten, auf die nachstehend eingegangen wird. Zum einen nutzt die Erfindung ein Wellgetriebe, konkret das Antriebswellgetriebe 18, bei dem das Hohlrad 14 als Getriebeausgang genutzt wird. Durch diese Bauweise besteht nur ein geringer Bauraumbedarf in Axialrichtung der Rotationsachse 9.

Zusätzlich ist der Flexspline 19 des Antriebswellgetriebes 18 mit einer Hülse 63 ausgebildet. Die Hülse 63 ist eine zylindrische Verlängerung des Flexsplines 19 von dessen Eingriffsbereich mit dem Hohlrad 14 in Axialrichtung der Rotationsachse 9. Die Hülse 63 liegt dabei axial entlang der Rotationsachse 9 gesehen in der Mitte der Antriebseinheit 1. An ihrem dem Eingriffsbereich mit dem Hohlrad 14 gegenüberliegenden axialen Ende ist die Hülse 63 über ein Drehlager 45 an einem stationären Gehäuseteil, beispielsweise dem Gegenlager 43, gelagert. Der Flexspline 19 erstreckt sich mit anderen Worten in Axialrichtung der Rotationsachse 9 gesehen von einer senkrecht zur Rotationsachse 9 angeordneten Getriebeebene E1, in der sich die Komponenten des Antriebswellgetriebes 18, Wellgenerator 20, Drehlager 21, Flexspline 19 und Hohlrad 14 in Radialrichtung der Rotationsachse 9 überlappen, bis zu einer Lagerebene E2, in der der Flexspline 19 mit dem Drehlager 45 in Radialrichtung der Rotationsachse 9 überlappt. Der Flexspline 19 weist im Inneren seines hohlzylindrischen Körpers einen Hülseninnenraum 69 auf. Um hier keinen Bauraum ungenutzt zu lassen, ist in den gezeigten Ausführungsbeispielen der Erfindung der Antriebselektromotor 27 im Hülseninnenraum 69 des Flexsplines 19 des Antriebswellgetriebes 18 angeordnet. Insbesondere ist der Antriebselektromotor 27 über die gesamte axiale Ausdehnung seines Stators 28 mit den Statorwicklungen 29 sowie dem Rotor 31 mit den Permanentmagneten 30 im Inneren des Flexsplines 19, insbesondere im Hülseninnenraum 69, angeordnet. Darüber hinaus ist der Antriebselektromotor 27 zwischen der Getriebeebene E1 und der Lagerebene E2 angeordnet.

Ein weiterer Kerngedanke der vorliegenden Erfindung liegt darin, die Antriebseinheit 1 dadurch in Axialrichtung der Rotationsachse 9 besonders schmal auszubilden, indem verschiedene Drehlager in Axialrichtung der Rotationsachse 9 auf selber Höhe mit anderen Komponenten angeordnet sind. Die einzelnen Komponenten der Antriebseinheit 1 sind daher in Axialrichtung der Rotationsachse 9 gesehen ineinander verschachtelt, wie schon der Antriebselektromotor 27 mit dem Antriebswellgetriebe 18 durch die Anordnung im Hülseninnenraum 69. Beispielsweise ist es vorgesehen, dass das Drehlager 46, beispielsweise ein Kugellager, für den Rotor 31 des Antriebselektromotors 27 gegenüber einem stationären Gegenlager 43 zusammen mit dem Antriebswellgetriebe 18 in der Getriebeebene E1 angeordnet ist. Das Drehlager 46 überlappt beispielsweise über seine gesamte axiale Ausdehnung in Richtung der Rotationsachse 9 mit den weiteren Komponenten des Antriebswellgetriebes 18, beispielsweise dem Wellgenerator 20, dem Drehlager 21, dem Flexspline 19 und dem Hohlrad 14. Auf diese Weise muss das Drehlager 46 nicht axial in Reihe mit diesen Komponenten des Antriebswellgetriebes 18 ausgebildet sein, wodurch insgesamt die Ausdehnung der Antriebseinheit 1 verkleinert wird.

Eine weitere Umsetzung dieses Grundgedankens findet sich in der Lagerebene E2. In der Lagerebene E2 des Flexsplines 19 überlappen sich in Radialrichtung der Rotationsachse 9 gesehen das Drehlager 45, über das der Flexspline 19 am stationären Gegenlager 43 gelagert ist, und der Freilauf 37 zwischen dem Flexspline 19 und dem stationären Gehäuseteil 56. Auch hierdurch wird die gesamte axiale Ausdehnung der Antriebseinheit 1 verringert.

Auch die Drehlager 49 und 50, beide ebenfalls bevorzugt Kugellager, sind in einer gemeinsamen, senkrecht zur Rotationsachse 9 angeordneten Wellenlagerebene E3 angeordnet. Das Drehlager 49 ist zwischen der Eingangsantriebswelle 33 und der Ausgangsabtriebswelle 12 angeordnet und lagert diese beiden rotierbar zueinander. Das Drehlager 50 ist zwischen der Ausgangsabtriebswelle 12 und einem stationären Gehäuseteil 57 angeordnet. Die Drehlager 49, 50 sind (bis auf den notwendigen Durchmesserunterschied) baugleich ausgeführt, liegen konzentrisch um die Rotationsachse 9 und überlappen sich in Radialrichtung der Rotationsachse 9 gesehen insbesondere vollständig.

Ein weiteres Drehlager 44 zwischen der Kurbelwelle 32 und einem stationären Gehäuseteil 56 liegt in einer weiteren senkrecht zur Rotationsachse 9 angeordneten Elektroniklagerebene E4, in der sich das Drehlager 44 zumindest teilweise mit der Steuereinheit 42 in Radialrichtung der Rotationsachse 9 überlappt. Damit ist die Steuereinheit 42 nicht lediglich außen an die Antriebseinheit 1 angesetzt, sondern mit Getriebeelementen der Antriebseinheit 1 verschachtelt ausgebildet, wodurch wieder axiale Ausdehnung eingespart wird. Nach außen ist die Steuereinheit 42 durch einen Gehäusedeckel 55 abgedeckt.

Die Steuereinheit 42 ist zur Steuerung des Antriebselektromotors 27 ausgebildet. Um die jeweiligen Steuerfunktionen erfüllen zu können, benötigt die Steuereinheit 42 verschiedene Messwerte zum aktuellen Betriebszustand der Antriebseinheit 1 und des Fortbewegungsmittels F. Beispielsweise ist die Steuereinheit 42 mit dem in den Figuren 1 und 2 gezeigten Federwegsensor 67 und dem Fahrgeschwindigkeitssensor 68 verbunden, die beide am Hinterrad angeordnet sind. Darüber hinaus ist die Steuereinheit 42 mit einem Stromstärkesensor 71 verbunden, über den die Steuereinheit 42 die im Antriebselektromotor 27 fließende Stromstärke misst. Zusätzlich ist die Steuereinheit 42 über eine Leiterplatte 39 mit einem Hallsensor 38 am Antriebselektromotor 27 verbunden. Sowohl die Leiterplatte 39 als auch der Hallsensor 38 sind ebenfalls mit dem Antriebselektromotor 27 im Hülseninnenraum 69 angeordnet. Über diesen Sensor 38 sind die Drehzahl und die Drehwinkelstellung des Antriebselektromotors 27 bestimmbar. Eine weitere mit der Steuereinheit 42 verbundene Sensoreinheit 51, 52 weist ein ruhendes Teil 52 am stationären Gehäuse, beispielsweise dem Gegenlager 43, und ein mit der Eingangsantriebswelle 33 mitrotierendes Teil 51 auf. Die Sensoreinheit 51, 52 bestimmt beispielsweise das durch menschliche Muskelkraft auf die Kurbelwelle 32 und damit die Eingangsantriebswelle 33 aufgebrachte Drehmoment sowie die Drehwinkelstellung. Aus der zeitlichen Ableitung der Drehwinkelstellung kann ebenfalls die Drehzahl der Kurbelwelle 32 und damit der Eingangsantriebswelle 33 bestimmt werden. Der stationäre Teil 52 der Sensoreinheit 51, 52 ist insbesondere mit einer Befestigungsmutter 53 am Gegenlager 43 befestigt, insbesondere in einem Bereich, in dem das Gegenlager 43 über ein Drehlager 54, insbesondere ein Nadellager, gegenüber der Kurbelwelle 32 gelagert ist.

Das in Figur 6 gezeigte Ausführungsbeispiel der Antriebseinheit 1 ist als Mittelantriebseinheit ausgebildet und daher an der Tretachse 65 angeordnet. Das erfindungsgemäße Fortbewegungsmittel F kann allerdings ebenso mit einer als Nabenantriebseinheit ausgebildeten Antriebseinheit 1 ausgebildet sein. Eine derartige Antriebseinheit 1 ist dann mit seiner Rotationsachse 9 koaxial mit der Radachse 66, insbesondere des Hinterrades, ausgebildet. Diese Ausbildung der Antriebseinheit 1 ist zu größten Teilen analog zur Antriebseinheit 1 ausgebildet als Mittelantriebseinheit. Es wird daher lediglich kurz auf die Unterschiede eingegangen. Insbesondere ist bei der Ausbildung der Antriebseinheit 1 als Nabenantriebseinheit keine Kurbelwelle 32 vorhanden, die die Antriebseinheit 1 durchdringt. Die Antriebseinheit 1 wird dagegen von einem ortsfesten, stehenden Achskörper 11 durchdrungen, der beispielsweise das Gegenlager 43 sowie verschiedene stationäre Gehäuseteile 56, 57 umfasst. Die Eingangsantriebswelle 33 wird nicht direkt von den Pedalen 6 beziehungsweise der Kurbelwelle 32 bewegt, sondern die Pedalbewegung wird über das Zugmittel 3 und das Zugmittelzahnrad 10 auf die Eingangsantriebswelle 33 übertragen. Gleichzeitig ist die Ausgangsabtriebswelle 12 nicht mit dem Zugmittelzahnrad 10 verbunden, sondern wird durch ein rotierendes Nabengehäuse gebildet, das drehfest mit dem Hohlrad 14 verbunden ist. Am Nabengehäuse sind die Speichen 59 des Hinterrades angeordnet. Darüber hinaus ist am Nabengehäuse ebenfalls typischerweise eine Bremsscheibe angeordnet. Ansonsten entspricht die Ausführungsform der Antriebseinheit 1 als Nabenantriebseinheit derjenigen als Mittelantriebseinheit, weshalb zur Vermeidung von Wiederholungen auf die vorstehenden Ausführungen Bezug genommen wird.

Alles in allem ermöglicht es die Erfindung, eine besonders kompakte Antriebseinheit 1 im Sinne ihrer axialen Erstreckung entlang der Rotationsachse 9 bereitzustellen. Darüber hinaus lassen sich mit der erfindungsgemäßen Antriebseinheit 1 eine Vielzahl von bei modernen Fortbewegungsmitteln F, beispielsweise Pedelecs, gewünschten Steuerfunktionen darstellen.

## Patentansprüche

1. Gleichzeitig durch aus menschlicher Muskelkraft und elektromotorisch bereitgestellte Antriebsenergie antreibbares Fortbewegungsmittel (F), insbesondere Pedelec, mit einer Antriebseinheit (1), die Antriebseinheit (1) umfassend
- eine Eingangsantriebswelle (33) zur Weiterleitung aus menschlicher Muskelkraft erzeugter Antriebsenergie,
- eine Ausgangsabtriebswelle (12) zur Abgabe von Antriebsenergie an eine Fahreinrichtung (72),
- ein um eine Rotationsachse (9) angeordnetes Antriebswellgetriebe (18) mit einem Wellgenerator (20), einem Flexspline (19) und einem Hohlrad (14),
- einen um die Rotationsachse (9) angeordneten Antriebselektromotor (27) mit einem Stator (28) und einem Rotor (31), wobei Antriebsenergie des Antriebselektromotors (27) über das Antriebswellgetriebe (18) auf die Ausgangsabtriebswelle (12) übertragbar ist,
wobei der Flexspline (19) als eine sich in Richtung der Rotationsachse (9) erstreckende Hülse (63) ausgebildet ist, die auf einer axialen Seite mit einem Drehlager (45) verbunden ist und zur anderen axialen Seite einen Eingriffsbereich für den Wellgenerator (20) aufweist, wobei zwischen dem Drehlager (45) und dem Wellgenerator (20) in Richtung der Rotationsachse (9) gesehen ein Hülseninnenraum (69) vorhanden ist,
**dadurch gekennzeichnet,**
**dass** der Antriebselektromotor (27) in Axialrichtung der Rotationsachse (9) zumindest teilweise bezüglich der axialen Erstreckung seines Stators (28) entlang der Rotationsachse (9) im Hülseninnenraum (69) des Flexsplines (19) des Antriebswellgetriebes (18) angeordnet ist.

2. Fortbewegungsmittel (F) nach Anspruch 1,
**dadurch gekennzeichnet,**
**dass** der Wellgenerator (20), der Flexspline (19) und das Hohlrad (14) des Antriebswellgetriebes (18) in einer senkrecht zur Rotationsachse (9) liegenden Getriebeebene (E1) einander überlappend angeordnet sind und der Flexspline (19), insbesondere die Hülse (63) des Flexsplines (19), in einer senkrecht zur Rotationsachse (9) liegenden Lagerebene (E2) gegenüber einem Gegenlager (43) rotierbar gelagert ist, wobei der Antriebselektromotor (27) zwischen der Getriebeebene (E1) und der Lagerebene (E2) angeordnet ist.

3. Fortbewegungsmittel (F) nach einem der vorhergehenden Ansprüche,
**dadurch gekennzeichnet,**
**dass** ein Drehzahl- und/oder Drehwinkelsensor (38), insbesondere Hallsensor, am Antriebselektromotor (27) vorgesehen ist, wobei der Drehzahl- und/oder Drehwinkelsensor (38) insbesondere im Hülseninnenraum (69) des Flexsplines (19) angeordnet ist.

4. Fortbewegungsmittel (F) nach einem der vorhergehenden Ansprüche,
**dadurch gekennzeichnet,**
**dass** ein Drehlager (50) für die Ausgangsabtriebswelle (12) und ein Drehlager (49) für die Eingangsantriebswelle (33) in einer gemeinsamen senkrecht zur Rotationsachse (9) liegenden Wellenlagerebene (E3) angeordnet sind.

5. Fortbewegungsmittel (F) nach einem der vorhergehenden Ansprüche,
**dadurch gekennzeichnet,**
**dass** der Antriebselektromotor (27) und das Antriebswellgetriebe (18) koaxial zueinander um die Rotationsachse (9) angeordnet sind.

6. Fortbewegungsmittel (F) nach einem der vorhergehenden Ansprüche,
**dadurch gekennzeichnet,**
**dass** die Eingangsantriebswelle (33) zumindest in einer Drehrichtung drehfest mit der Ausgangsabtriebswelle (12) verbunden ist und die aus menschlicher Muskelkraft stammende Energie auf die Ausgangsabtriebswelle (12) übertragen wird.

7. Fortbewegungsmittel (F) nach einem der vorhergehenden Ansprüche,
**dadurch gekennzeichnet,**
**dass** der Flexspline (19) des Antriebswellgetriebes (18) über einen Freilauf (37) an einem stationären Gehäuseteil (56) gelagert ist.

8. Fortbewegungsmittel (F) nach dem vorhergehenden Anspruch,
**dadurch gekennzeichnet,**
**dass** der Freilauf (37) schaltbar ausgebildet ist oder der Flexspline (19) und das stationäre Gehäuseteil (56) durch eine separate Kupplungseinheit drehfest verbindbar sind, so dass der Antriebselektromotor (27) als Generator betreibbar ist, der Antriebsenergie vom Hohlrad (14) aufnimmt und in elektrische Energie umwandelt.

9. Fortbewegungsmittel (F) nach einem der Ansprüche 7 bis 8,
**dadurch gekennzeichnet,**
**dass** ein Drehlager (45) zwischen einem Gegenlager (43) und dem Flexspline (19) des Antriebswellgetriebes (18) in einer senkrecht zur Rotationsachse (9) liegenden Lagerebene (E2) mit einem Freilauf (37) überlappend angeordnet ist.

10. Fortbewegungsmittel (F) nach einem der vorhergehenden Ansprüche,
**dadurch gekennzeichnet,**
**dass** der Wellgenerator (20), der Flexspline (19) und das Hohlrad (14) des Antriebswellgetriebes (18) in einer senkrecht zur Rotationsachse (9) liegenden Getriebeebene (E1) zusammen mit einem Drehlager (46) für den Rotor (31) des Antriebselektromotors (27), insbesondere bezüglich eines Gegenlagers (43), angeordnet ist.

11. Fortbewegungsmittel (F) nach einem der vorhergehenden Ansprüche,
**dadurch gekennzeichnet,**
**dass** in Richtung entlang der Rotationsachse (9) die Wellenlagerebene (E3), die Getriebeebene (E1) des Antriebswellgetriebes (18), die Lagerebene (E2) des Flexsplines (19) des Antriebswellgetriebes (18) und insbesondere auch eine Elektroniklagerebene (E4) aufeinander folgend angeordnet sind.

12. Fortbewegungsmittel (F) nach einem der vorhergehenden Ansprüche,
**dadurch gekennzeichnet,**
**dass** die Antriebseinheit (1) als Mittelantriebseinheit ausgebildet ist, wobei insbesondere die Rotationsachse (9) koaxial mit einer Tretachse (65) angeordnet ist, oder dass die Antriebseinheit (1) als Nabenantriebseinheit ausgebildet ist, wobei insbesondere die Rotationsachse (9) koaxial mit einer Radachse (66) angeordnet ist.

13. Fortbewegungsmittel (F) nach einem der vorhergehenden Ansprüche,
**dadurch gekennzeichnet,**
**dass** die Erstreckung (B1) der Antriebseinheit (1) entlang der Rotationsachse (9) maximal 100 mm, bevorzugt maximal 85 mm, besonders bevorzugt maximal 70 mm, insbesondere beispielsweise maximal 60 mm, beträgt.

14. Fortbewegungsmittel (F) nach einem der vorhergehenden Ansprüche,
**dadurch gekennzeichnet,**
**dass** eine Steuereinheit (42) zur Steuerung des Antriebselektromotors (27) vorgesehen ist, die wenigstens eines der folgenden Merkmale aufweist:
- sie ist zusammen mit einem Drehlager (44) für eine Kurbelwelle (32) in der senkrecht zur Rotationsachse (9) liegenden Elektroniklagerebene (E4) angeordnet;
- sie ist mit einem Drehwinkel- und/oder Drehzahl- und/oder Drehmomentsensor (51, 52) an der Eingangsantriebswelle (33) verbunden;
- sie ist mit einem Fahrgeschwindigkeitssensor (68) verbunden;
- sie ist mit einem Drehzahl- und/oder Drehwinkelsensor (38), insbesondere Hallsensor, am Antriebselektromotor (27) verbunden;
- sie ist mit einem Stromstärkesensor (71) für den Antriebselektromotor (27) verbunden;
- sie steuert die Drehzahlen und Drehmomente des Antriebselektromotors (27) derart, dass die Antriebsenergie inklusive der aus menschlicher Muskelkraft stammenden Energie an der Ausgangsabtriebswelle (12) der Energieanforderung der Antriebseinheit (1) entspricht;
- sie steuert die Drehzahl des Antriebselektromotors (27) proportional zur Fahrgeschwindigkeit;
- je nach Drehrichtung einer durch menschliche Muskelkraft angetriebenen Welle (32, 33) aktiviert die Steuereinheit (42) eine Antriebsunterstützungsfunktion oder eine Bremsfunktion;
- sie ist mit einem Federwegsensor (67) des Fortbewegungsmittels (F) verbunden und gleicht einen durch Einfederung des Fortbewegungsmittels (F) verursachten Pedalrückschlag durch eine Ansteuerung des Antriebselektromotors (27) zumindest teilweise aus;
- sie ist mit einer Anzeigeeinheit (70) verbunden, die durch ein Sichtfenster in der Antriebseinheit (1) von außen sichtbar ist;
- sie bringt die Eingangsantriebswelle (33) durch eine Ansteuerung des Antriebselektromotors (27) in eine Anfahrstellung.

15. Fortbewegungsmittel (F) nach einem der vorhergehenden Ansprüche,
**gekennzeichnet durch**
wenigstens eines der folgenden Merkmale:
- das Fortbewegungsmittel (F) ist als ein-, zwei- oder dreispuriges Fahrzeug, insbesondere Elektrofahrrad, Pedelec, E-Bike, Cargobike, Lastenrad oder Transportrad ausgebildet;
- das Fortbewegungsmittel (F) umfasst einen Rahmen (73), insbesondere mit Oberrohr und/oder Unterrohr;
- das Fortbewegungsmittel (F) umfasst einen elektrischen Energiespeicher, insbesondere angeordnet im Oberrohr und/oder Unterrohr;
- das Fortbewegungsmittel (F) umfasst ein Vorderrad (72) und ein Hinterrad (72);
- das Vorderrad (72) ist lenkbar ausgebildet;
- das Fortbewegungsmittel (F) umfasst Pedale (6), die über Kurbelarme (5) um eine Tretachse (65) rotierbar ausgebildet sind und die insbesondere drehfest mit der Eingangsantriebswelle (33) verbunden sind.

## Claims

1. A means of transport (F), in particular a pedelec, that can be simultaneously driven electro-motively and bv human muscular power, with a drive unit (1), said drive unit (1) comprising
- an input shaft (33) for transmitting drive energy generated from human muscular power,
- an output shaft (12) for delivering drive energy to a travel unit (72),
- a harmonic drive transmission (18) arranged around a rotation axis (9) and having a wave generator (20), a flexspline (19) and a ring gear (14),
- an electric drive motor (27) arranged around the rotation axis (9) and having a stator (28) and a rotor (31), wherein drive energy of the electric drive motor (27) can be transmitted to the output shaft (12) via the harmonic drive transmission (18),
wherein the flexspline (19) is configured as a sleeve (63) extending in the direction of the rotation axis (9), which is connected on one axial side to a rotary bearing (45) and toward the other axial side has an engagement region for the wave generator (20), wherein a sleeve cavity (69) is provided between the rotary bearing (45) and the wave generator (20), as seen in the direction of the rotation axis (9),
**characterized in that**
the electric drive motor (27) with respect to the axial extent of its stator (28) along the rotation axis (9) is arranged in an axial direction of the rotation axis (9) at least partially in the sleeve cavity (69) of the flexspline (19) of the harmonic drive transmission (18).

2. The means of transport (F) according to claim 1,
**characterized in that**
the wave generator (20), the flexspline (19) and the ring gear (14) of the harmonic drive transmission (18) are arranged overlapping one another in a gearing plane (E1) perpendicular to the rotation axis (9), and the flexspline (19), in particular the sleeve (63) of the flexspline (19), is mounted rotatably with respect to a counter bearing (43) in a bearing plane (E2) perpendicular to the rotation axis (9), wherein the electric drive motor (27) is arranged between the gearing plane (E1) and the bearing plane (E2).

3. The means of transport (F) according to any one of the preceding claims,
**characterized in that**
a speed and/or rotation angle sensor (38), in particular a Hall sensor, is provided at the electric drive motor (27), wherein the speed and/or rotation angle sensor (38) is arranged in particular in the sleeve cavity (69) of the flexspline (19).

4. The means of transport (F) according to any one of the preceding claims,
**characterized in that**
a rotary bearing (50) for the output shaft (12) and a rotary bearing (49) for the input shaft (33) are arranged in a common shaft bearing plane (E3) perpendicular to the rotation axis (9).

5. The means of transport (F) according to any one of the preceding claims,
**characterized in that**
the electric drive motor (27) and the harmonic drive transmission (18) are arranged coaxially to one other around the rotation axis (9).

6. The means of transport (F) according to any one of the preceding claims,
**characterized in that**
the input shaft (33) is connected to the output shaft (12) in a co-rotating manner at least in one direction of rotation, and the energy provided through human muscular power is transmitted to the output shaft (12).

7. The means of transport (F) according to any one of the preceding claims,
**characterized in that**
the flexspline (19) of the harmonic drive transmission (18) is mounted on a stationary housing part (56) via a freewheel (37).

8. The means of transport (F) according to the preceding claim,
**characterized in that**
the freewheel (37) is switchable or the flexspline (19) and the stationary housing part (56) can be connected in a co-rotating manner by a separate clutch unit, so that the electric drive motor (27) can be operated as a generator which receives drive energy from the ring gear (14) and converts it into electrical energy.

9. The means of transport (F) according to any one of claims 7 to 8,
**characterized in that**
a rotary bearing (45) is arranged between a counter bearing (43) and the flexspline (19) of the harmonic drive transmission (18) in a bearing plane (E2) perpendicular to the rotation axis (9) such that it overlaps with a freewheel (37).

10. The means of transport (F) according to any one of the preceding claims,
**characterized in that**
the wave generator (20), the flexspline (19) and the ring gear (14) of the harmonic drive transmission (18) are arranged in a gearing plane (E1) perpendicular to the rotation axis (9) together with a rotary bearing (46) for the rotor (31) of the electric drive motor (27), in particular with respect to a counter bearing (43).

11. The means of transport (F) according to any one of the preceding claims,
**characterized in that**
in a direction along the rotation axis (9), the shaft bearing plane (E3), the gearing plane (E1) of the harmonic drive transmission (18), the bearing plane (E2) of the flexspline (19) of the harmonic drive transmission (18) and, in particular, also an electronics bearing plane (E4) are arranged in succession.

12. The means of transport (F) according to any one of the preceding claims,
**characterized in that**
the drive unit (1) is configured as a center drive unit, in particular wherein the rotation axis (9) is arranged coaxially with a pedaling axis (65), or that the drive unit (1) is configured as a hub drive unit, in particular wherein the rotation axis (9) is arranged coaxially with a wheel axis (66).

13. The means of transport (F) according to any one of the preceding claims,
**characterized in that**
the maximum extent (B1) of the drive unit (1) along the rotation axis (9) is not more than 100 mm, preferably not more than 85 mm, more preferably not more than 70 mm, in particular, for example, not more than 60 mm.

14. The means of transport (F) according to any one of the preceding claims,
**characterized in that**
a control unit (42) for controlling the electric drive motor (27) is provided, which has at least one of the following features:
- it is arranged together with a rotary bearing (44) for a crankshaft (32) in the electronics bearing plane (E4) perpendicular to the rotation axis (9);
- it is connected to a rotation angle and/or speed and/or torque sensor (51, 52) at the input shaft (33);
- it is connected to a travel speed sensor (68);
- it is connected to a speed and/or rotation angle sensor (38), in particular a Hall sensor, at the electric drive motor (27);
- it is connected to an amperemeter (71) for the electric drive motor (27);
- it controls the speeds and torques of the electric drive motor (27) such that the drive energy, including the energy obtained from human muscular power, at the output shaft (12) corresponds to the energy requirement of the drive unit (1);
- it controls the speed of the electric drive motor (27) in proportion to the travel speed;
- depending on the direction of rotation of a shaft (32, 33) driven by human muscular power, the control unit (42) activates a drive support function or a brake function;
- it is connected to a suspension travel sensor (67) of the means of transport (F) and at least partially compensates a pedal kickback caused by compression of a suspension of the means of transport (F) by controlling the electric drive motor (27);
- it is connected to a display unit (70) which is visible from the outside through a viewing window in the drive unit (1);
- it brings the input shaft (33) into a starting position by controlling the electric drive motor (27).

15. The means of transport (F) according to any one of the preceding claims,
**characterized by**
at least one of the following features:
- the means of transport (F) is configured as a single-, double- or triple-track vehicle, in particular an electric bicycle, pedelec, e-bike, cargo bike or transport bike;
- the means of transport (F) comprises a frame (73), in particular with a top tube and/or down tube;
- the means of transport (F) comprises an electrical energy storage device, in particular arranged in the top tube and/or down tube;
- the means of transport (F) comprises a front wheel (72) and a rear wheel (72);
- the front wheel (72) is steerable;
- the means of transport (F) comprises pedals (6) which are rotatable about a pedaling axis (65) via crank arms (5) and which are in particular connected to the input shaft (33) in a co-rotating manner.

## Revendications

1. Moyen de locomotion (F), en particulier pedelec, pouvant être entraîné concomitamment par la force musculaire humaine et l'énergie d'entraînement fournie par un moteur électrique, comportant une unité d'entraînement (1), l'unité d'entraînement (1) comprenant
- un arbre d'entraînement d'entrée (33) pour la transmission de l'énergie d'entraînement générée par la force musculaire humaine,
- un arbre de sortie entraîné (12) pour la fourniture de l'énergie d'entraînement à un dispositif de déplacement (72),
- un engrenage d'arbre d'entraînement (18) disposé autour d'un axe de rotation (9) et comportant un générateur d'arbre (20), une clavette souple (19) et une couronne (14),
- un moteur électrique d'entraînement (27) disposé autour de l'axe de rotation (9) comportant un stator (28) et un rotor (31), l'énergie d'entraînement du moteur électrique d'entraînement (27) pouvant être transmise à l'arbre de sortie entraîné (12) par l'intermédiaire de l'engrenage d'arbre d'entraînement (18),
la clavette souple (19) étant réalisée sous la forme d'un manchon (63) s'étendant dans la direction de l'axe de rotation (9), manchon qui est relié sur un côté axial à un palier de rotation (45) et qui présente vers l'autre côté axial une zone de mise en prise pour le générateur d'arbre (20), un espace intérieur de manchon (69) étant présent entre le palier de rotation (45) et le générateur d'arbre (20), vu dans la direction de l'axe de rotation (9), **caractérisé en ce que**
le moteur électrique d'entraînement (27) est disposé, dans la direction axiale de l'axe de rotation (9), au moins partiellement dans l'espace intérieur de manchon (69) de la clavette souple (19) de l'engrenage d'arbre d'entraînement (18), par rapport à l'extension axiale de son stator (28) le long de l'axe de rotation (9).

2. Moyen de locomotion (F) selon la revendication 1,
**caractérisé en ce**
**que** le générateur d'arbre (20), la clavette souple (19) et la couronne (14) de l'engrenage d'arbre d'entraînement (18) sont disposés en se chevauchant dans un plan d'engrenage (E1) perpendiculaire à l'axe de rotation (9) et que la clavette souple (19), en particulier le manchon (63) de la clavette souple (19), est monté de manière rotative par rapport à un contre-palier (43) dans un plan de palier (E2) perpendiculaire à l'axe de rotation (9), le moteur électrique d'entraînement (27) étant disposé entre le plan d'engrenage (E1) et le plan de palier (E2).

3. Moyen de locomotion (F) selon l'une des revendications précédentes,
**caractérisé en ce**
**qu'**un capteur de vitesse de rotation et/ou d'angle de rotation (38), en particulier un capteur à effet Hall, est prévu sur le moteur électrique d'entraînement (27), le capteur de vitesse de rotation et/ou d'angle de rotation (38) étant disposé en particulier dans l'espace intérieur de manchon (69) de la clavette souple (19).

4. Moyen de locomotion (F) selon l'une des revendications précédentes,
**caractérisé en ce**
**qu'**un palier de rotation (50) pour l'arbre de sortie entraîné (12) et un palier de rotation (49) pour l'arbre d'entraînement d'entrée (33) sont disposés dans un plan de palier d'arbre (E3) commun perpendiculaire à l'axe de rotation (9).

5. Moyen de locomotion (F) selon l'une des revendications précédentes,
**caractérisé en ce**
**que** le moteur électrique d'entraînement (27) et l'engrenage d'arbre d'entraînement (18) sont disposés coaxialement l'un par rapport à l'autre autour de l'axe de rotation (9).

6. Moyen de locomotion (F) selon l'une des revendications précédentes,
**caractérisé en ce**
**que** l'arbre d'entraînement d'entrée (33) est relié solidairement en rotation à l'arbre de sortie entraîné (12) au moins dans un sens de rotation et l'énergie provenant de la force musculaire humaine est transmise à l'arbre de sortie entraîné (12).

7. Moyen de locomotion (F) selon l'une des revendications précédentes,
**caractérisé en ce**
**que** la clavette souple (19) de l'engrenage d'arbre d'entraînement (18) est montée par l'intermédiaire d'une roue libre (37) sur une partie stationnaire du boîtier (56).

8. Moyen de locomotion (F) selon la revendication précédente,
**caractérisé en ce**
**que** la roue libre (37) est conçue de manière à pouvoir être commutée ou que la clavette souple (19) et la partie de boîtier stationnaire (56) peuvent être reliées de manière solidaire en rotation par une unité d'accouplement séparée, de sorte que le moteur électrique d'entraînement (27) peut être exploité en tant que générateur qui reçoit l'énergie d'entraînement de la couronne (14) et la transforme en énergie électrique.

9. Moyen de locomotion (F) selon l'une des revendications 7 à 8,
**caractérisé en ce**
**qu'**un palier de rotation (45) est disposé entre un contre-palier (43) et la clavette souple (19) de l'engrenage d'arbre d'entraînement (18) dans un plan de palier (E2) perpendiculaire à l'axe de rotation (9), en chevauchant une roue libre (37).

10. Moyen de locomotion (F) selon l'une des revendications précédentes,
**caractérisé en ce**
**que** le générateur d'arbre (20), la clavette souple (19) et la couronne (14) de l'engrenage d'arbre d'entraînement (18) sont disposés dans un plan d'engrenage (E1) perpendiculaire à l'axe de rotation (9), conjointement avec un palier de rotation (46) pour le rotor (31) du moteur électrique d'entraînement (27), en particulier par rapport à un contre-palier (43).

11. Moyen de locomotion (F) selon l'une des revendications précédentes,
**caractérisé en ce**
**que,** dans la direction le long de l'axe de rotation (9), le plan de palier d'arbre (E3), le plan d'engrenage (E1) de l'engrenage d'arbre d'entraînement (18), le plan de palier (E2) de la clavette souple (19) de l'engrenage d'arbre d'entraînement (18) et en particulier aussi un plan de palier électronique (E4) sont disposés les uns à la suite des autres.

12. Moyen de locomotion (F) selon l'une des revendications précédentes,
**caractérisé en ce**
**que** l'unité d'entraînement (1) est conçue comme une unité d'entraînement centrale, l'axe de rotation (9) étant en particulier disposé coaxialement avec un axe de pédalier (65), ou **en ce que** l'unité d'entraînement (1) est conçue comme une unité d'entraînement de moyeu, l'axe de rotation (9) étant en particulier disposé coaxialement avec un axe de roue (66)

13. Moyen de locomotion (F) selon l'une des revendications précédentes,
**caractérisé en ce**
**que** l'extension (B1) de l'unité d'entraînement (1) le long de l'axe de rotation (9) est de 100 mm maximum, de préférence de 85 mm maximum, de manière particulièrement préférée de 70 mm maximum, en particulier par exemple de 60 mm maximum.

14. Moyen de locomotion (F) selon l'une des revendications précédentes,
**caractérisé en ce**
**qu'**il est prévu une unité de commande (42) pour la commande du moteur électrique d'entraînement (27), qui présente au moins l'une des caractéristiques suivantes :
- elle est disposée avec un palier de rotation (44) pour un vilebrequin (32) dans le plan de palier électronique (E4) perpendiculaire à l'axe de rotation (9) ;
- elle est reliée à un capteur d'angle de rotation et/ou de vitesse de rotation et/ou de couple (51, 52) sur l'arbre d'entraînement d'entrée (33) ;
- elle est reliée à un capteur de vitesse de déplacement (68) ;
- elle est reliée à un capteur de vitesse de rotation et/ou d'angle de rotation (38), en particulier un capteur à effet Hall, sur le moteur électrique d'entraînement (27) ;
- elle est reliée à un capteur d'intensité de courant (71) pour le moteur électrique d'entraînement (27) ;
- elle commande les vitesses de rotation et les couples du moteur électrique d'entraînement (27) de telle sorte que l'énergie d'entraînement, y compris l'énergie provenant de la force musculaire humaine sur l'arbre de sortie entraîné (12), correspond au besoin en énergie de l'unité d'entraînement (1) ;
- elle commande la vitesse de rotation du moteur électrique d'entraînement (27) proportionnellement à la vitesse de déplacement ;
- selon le sens de rotation d'un arbre (32, 33) entraîné par la force musculaire humaine, l'unité de commande (42) active une fonction d'assistance à l'entraînement ou une fonction de freinage ;
- elle est reliée à un capteur de course à ressort (67) du moyen de locomotion (F) et compense au moins partiellement un rebond de pédale provoqué par la compression de ressort du moyen de locomotion (F) par une commande du moteur électrique d'entraînement (27) ;
- elle est reliée à une unité d'affichage (70) visible de l'extérieur à travers un hublot situé dans l'unité d'entraînement (1) ;
- elle amène l'arbre d'entraînement d'entrée (33) dans une position de démarrage par une commande du moteur électrique d'entraînement (27).

15. Moyen de locomotion (F) selon l'une des revendications précédentes,
**caractérisé par**
au moins l'une des caractéristiques suivantes :
- le moyen de locomotion (F) est conçu comme un véhicule à une, deux ou trois voies, en particulier un vélo électrique, un pedelec, un E-Bike, un vélo cargo, un vélo de charge ou un vélo de transport ;
- le moyen de locomotion (F) comprend un cadre (73), en particulier avec un tube supérieur et/ou un tube inférieur ;
- le moyen de locomotion (F) comprend un accumulateur d'énergie électrique, en particulier disposé dans le tube supérieur et/ou le tube inférieur ;
- le moyen de locomotion (F) comprend une roue avant (72) et une roue arrière (72) ;
- la roue avant (72) est conçue de manière à pouvoir être dirigée ;
- le moyen de locomotion (F) comprend des pédales (6) qui sont réalisées de manière à pouvoir tourner autour d'un axe de pédalier (65) par l'intermédiaire de bras de manivelle (5) et qui sont reliées en particulier de manière solidaire en rotation à l'arbre d'entraînement d'entrée (33).
